# EUROPÄISCHE PATENTSCHRIFT

(11) **EP 3 016 341 B1**
(45) Veröffentlichungstag und Bekanntmachung des Hinweises auf die Patenterteilung: **12.12.2018**
(21) Anmeldenummer: 14190475.5
(22) Anmeldetag: 27.10.2014
(51) Int. Cl.: H04L 29/06

(54) **Verfahren und Anordnung zur effizienten Gestaltung von Web-basierten Kommunikationsdiensten**
Method and arrangement for the efficient design of web-based communication services
Procédé et système de conception efficace de services de communication basés sur le web

(43) Veröffentlichungstag der Anmeldung: 04.05.2016
(73) Patentinhaber: Deutsche Telekom AG, 53113 Bonn (DE)
(72) Erfinder: Copenhaguen-Bormuth, Jürgen, 68169 Mannheim (DE); Hoffmann, Robert, 65207 Wiesbaden (DE); Scheerbarth, Thomas, 12555 Berlin (DE); Stegmann, Joachim, 64289 Darmstadt (DE)
(74) Vertreter: 2K Patentanwälte Blasberg Kewitz & Reichel

(56) Entgegenhaltungen:
- KR-A- 20140 053 791
- US-A1- 2014 222 963
- Anonymous: "Modular programming - Wikipedia, the free encyclopedia", , 29. Juli 2014 (2014-07-29), XP055180453, Gefunden im Internet: URL:http://en.wikipedia.org/w/index.php?ti tle=Modular_programming&oldid=618953117 [gefunden am 2015-03-31]
- Anonymous: "Plug-in - Wikipedia", , 19 June 2014 (2014-06-19), XP055413651, Retrieved from the Internet: URL:https://de.wikipedia.org/w/index.php?t itle=Plug-in&oldid=131448168 [retrieved on 2017-10-09]

## Beschreibung

Die vorliegende Erfindung bezieht sich allgemein auf das Gebiet der Telekommunikation. Im Speziellen betrifft die Erfindung die effiziente Gestaltung von IP-basierten Kommunikationsdiensten.

Dabei werden insbesondere IP-basierte Kommunikationsdienste herausgestellt, welche mittels heute genutzten und zukünftigen Real Time Communication Technologien Telefonie- und Videokommunikation über eine beliebige Laufzeitumgebung ermöglichen.

Laufzeitumgebung steht hier für ein Programm, das bei dem Nutzer auf einem Endgerät läuft und Realtime Communication ermöglicht. Dies kann ein Webbrowser oder auch eine endgerätespezifische Anwendung sein.

### Gebiet der Erfindung:

Die Entwicklung der Sprach- und Videokommunikation hat in den letzten Jahren einen dramatischen Wandel erfahren. Standen vor 20 Jahren im Wesentlichen noch Festnetztelefone als sprachbasierte Telekommunikationsmittel im Vordergrund, sind heute überwiegend Mobiltelefone im Einsatz, um miteinander zu kommunizieren.

Die fortschreitende technologische Entwicklung im Bereich der mobilen Endgeräte, inklusive der dazugehörigen Kameras, als auch die zunehmende Bereitstellung von mobilen Breitbandzugängen über 3G und LTE (Long Term Evolution) und deren Nachfolger, ermöglichen damit einen qualitativ akzeptierten Einsatz von Videokommunikation, d.h. die zusätzliche Übertragung von Videosignalen parallel zur Sprachkommunikation.

Insofern basiert die heutige Kommunikationslandschaft sowohl in Deutschland als auch in globalem Maßstab im Wesentlichen auf Mobilkommunikation via GSM , Videokommunikation via 3G/LTE und der herkömmlichen Festnetztelefonie, welche nach und nach den Übergang vom klassischen leitungsvermittelten ISDN-Netz hin zum paketvermittelten IP-Netz findet.

Eine völlig neue Art der Kommunikation findet derzeit Beachtung - die web-basierte Echtzeitkommunikation. Grundlage hierfür sind die vom W3C und der IETF spezifizierten Protokolle und Schnittstellen mit dem Namen WebRTC, welche nach und nach in die heute bekannten, verschiedenen Browser wie bspw. Chrome, Opera oder Firefox eingebaut werden.

WebRTC (Web Real-Time Communication, deutsch "Web-Echtzeitkommunikation") ist ein beim World Wide Web Consortium (W3C) in Standardisierung befindlicher offener Standard für Echtzeitkommunikation (VoIP, Chat, Video-Telefonie) innerhalb eines Webbrowsers ohne eine entsprechende Software-Implementierung. Es dient der Aufnahme, Kodierung und (Peer-to-Peer-)Übertragung von Multimedia-Inhalten und Dateien zwischen Webbrowsern in Echtzeit. Die Referenzimplementierung wird als freie Software im Quellcode unter den Bedingungen einer BSDartigen Lizenz verbreitet. Die Standardisierung wird maßgeblich betrieben und unterstützt von Google Inc., Mozilla Foundation und Opera Software ASA.

Mit diesen eingebauten Protokollen und Code-Bestandteilen wird es erstmals möglich, den herkömmlichen Internet Browser als Kommunikationsterminal zu nutzen.

Damit wird der Browser zum Endgerät, über das sich z.B. telefonieren, chatten oder videotelefonieren lässt.

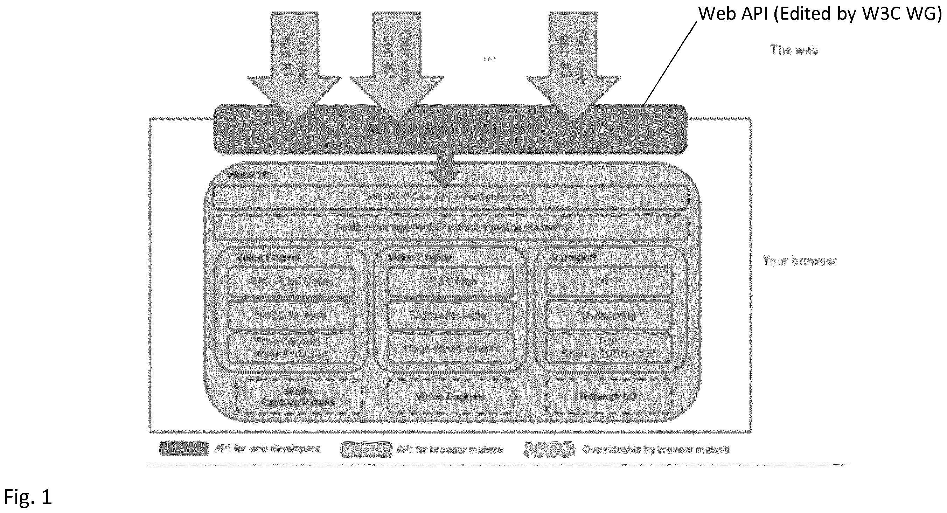

Figur 1 beschreibt die zugehörige technische Abstraktion. Dabei wird ersichtlich, dass sämtliche Funktionalitäten, welche den direkten Zugang und die unmittelbare Verarbeitung von Video- und Audiosignalen realisieren, im Browser selbst implementiert sind. Diese Funktionalitäten werden dem Anwender über eine definierte Schnittstelle zur Verfügung gestellt. Insofern ist es mit der WebRTC-Technologie erstmals möglich, auf einfache Art und Weise den Browser als Kommunikations-Terminal zu nutzen.

Das Framework basiert auf HTML5 und JavaScript. Die Übertragung erfolgt mit (S)RTP über eine mittels der XMPP-Erweiterung Jingle in Verbindung mit dem neu eingeführten JavaScript Session Establishment Protocol (JSEP) ausgehandelte Direktverbindung (Peer-to-Peer). Neben einer Anzahl mindestens zu unterstützender, (lizenzkosten-)freier Multimedia-Codecs können standardkonforme Implementierungen beliebige weitere Verfahren unterstützen. Für Audio ist Opus als zu bevorzugendes Verfahren vorgesehen neben der für Kompatibilität zu herkömmlichen Telefonsystemen ebenfalls geforderten Unterstützung für A-law und µ-law. Der neuere Internetstandard Opus ersetzt die zuvor verwendeten, von GIPS entwickelten iLBC und iSAC. Google setzt sich daneben für den selbst freigekauften Video-Codec VP8 als vorgeschriebenes Video-Format ein, das als alternativlos dargestellt wird. Neben mitgelieferten Multimedia-Codecs liegen der Referenzimplementierung weiterhin Werkzeuge für unter anderem Nebengeräuschunterdrückung und die Software-Bibliothek libjingle bei.

Da WebRTC quelloffen ist, kann jeder seine eigene WebRTCbasierte Anwendung schreiben, oder einfach einen Internetdienst dazu nutzen. So ist z. B. die Software hinter palava.tv Open Source Software und bei GitHub erhältlich.

Der Video- und Audiostream kann ohne Zwischenschaltung eines Streamingservers direkt von Browser zu Browser oder auch über eine Client-Server-Architektur mit Hilfe einer Multipoint Control Unit (MCU) übertragen werden. Es ist keine weitere Software nötig, da moderne Browser WebRTC bereits beherrschen. Es sind auch keine Browser-Plug-Ins oder Addons notwendig. Damit ist die Anwendung an kein Betriebssystem gebunden, also plattformunabhängig.

Video- und Audiostream werden verschlüsselt übertragen.

Der WebRTC-Anwendung bzw. Webseite muss lediglich Zugriff auf Kamera und Mikrofon gestattet werden.

Prinzipiell sind keine Benutzerkonten nötig und somit müssen keine persönliche Daten preisgeben werden.

Den Gesprächspartnern muss lediglich der angebotene, spezielle Link übermittelt werden, um an der Konferenz teilnehmen zu können.

Die vorliegende Erfindung bezieht sich in ihrer Gesamtheit auf diese Art von Kommunikation - auf die Möglichkeiten und Verfahren, mittels Browser mit anderen Teilnehmern zu kommunizieren - unabhängig von der Art ihrer Endgeräte, sei es ein klassisches Festnetztelefon, ein Mobiltelefon oder eben auch ein Browser.

Dabei steht eine Komponente im Mittelpunkt, die als Kommunikations-steuereinheit fungiert und verschiedene Aufgaben übernimmt, welche für eine nahtlose Kommunikation zwischen browserbasierten und anderen verschiedenen Endgeräten die entsprechenden Funktionsmodule bereitstellt. Diese wird im Folgenden mit dem Arbeitstitel 'ComX' bezeichnet.

Durch die Möglichkeit, auf einfache Art und Weise browserbasierte Telefonie- oder Chat-Dienste für verschiedenste Anwendungsszenarien einfachen und schnell zu entwickeln und umzusetzen, findet die WebRTC-Technologie in der Telekommunikationsbranche eine sehr starke Aufmerksamkeit.

Diese umfassen Anwendungsbereiche wie bspw. den Kundenservice (Call Center - Kundenkommunikation), einfache Peer-to-Peer-Kommunikation, Konferenzlösungen, Entertain- und IPTV-Anwendungen sowie auch Machine-to-Machine-Szenarien.

Auf der Browser-Seite unterstützen Firmen wie Google, Mozilla oder Opera diese Technologie in ihren aktuellen Browserversionen von Chrome, Firefox oder Opera.

Auf der Netzwerk-Seite bieten verschiedene Hersteller sogenannte WebRTC-Gateways an, welche den Übergang vom IP-Netz zu den klassischen Telefoniewelten wie PSTN, PBX oder IMS realisieren.

Im Bereich Standardisierung arbeiten sowohl das W3C als auch die IETF weiter an der Ausgestaltung des bisherigen Standards, um bisherige Protokolle und Schnittstellen mit weiteren Funktionalitäten anzureichern.

Insgesamt ist die IT Branche mit verschiedenen Ansätzen dabei, Lösungsmodule zu entwerfen und bereitzustellen, um diese Form der Echtzeitkommunikation in einen breiten Anwendungshorizont zu überführen.

Trotz der noch jungen Entwicklung gibt es schon die ersten kommerziellen Anwendungen, welche WebRTC einsetzen und unterstützen. Hierbei Zu nennen sind u.a.

### - Amazon: MayDay Button

Ein Button auf dem Kindl Fire, über den der Nutzer einen Amazon-Agenten erreicht, welcher per Videokommunikation mit dem Kunden agiert und ihm bei Fragen behilflich ist, sowie mit Methoden des Screensharings ihm verschiedene Hilfestellungen anbieten kann.

### - Deutsche Telekom: Home Talk App

Für die Umsetzung der unterschiedlichen Anwendungsfälle werden technisch heute - vereinfacht ausgedrückt - bestimmte WebRTC-Gateways eingesetzt, um die Kommunikation nicht nur von Browser zu Browser, sondern auch zwischen Browser und anderen Endgeräten zu ermöglichen.

Figur 2 zeigt eine solche Konfiguration, bei dem ein WebRTC-Gateway (GW) eines bestimmten Herstellers (GW1) die Medien- und Signalisierungsströme zwischen Browser und IMS (IP Multimedia Subsystem) so vermittelt und transcodiert, dass beide Seiten miteinander kommunizieren können. Dabei gilt es zu erwähnen, dass der Hersteller des GW1 auch die Programmierschnittstelle - API1 (API - Application Programming Interface) vorgibt, nach der sich der Web Developer richten muss.

Figur 3 zeigt in Ergänzung dazu eine Konfiguration, bei der der Browser mit einem klassischen SIP-Telefon über ein Gateway verbunden wird. Dieses könnte von einem anderen Hersteller (GW2) kommen, der dann wiederum seine API (API2) dem Web Developer zur Verfügung stellt.

Figur 7 zeigt den herkömmlichen Einsatz eines User Agenten im Browser.

Im Folgenden wird auf das Media Gateway eingegangen. In WebRTC-basierten Kommunikationsszenarien wird davon ausgegangen, dass man mit dem Browser verschiedene Kommunikationsformen etablieren kann. Schwerpunktmäßig stehen hierbei die herkömmliche (audio-) basierte Telefonie, Videotelefonie und der Chat im Vordergrund.

Dabei kann es zu unterschiedlichen Ausgestaltungen der Ende-zu-Ende-Verbindungen kommen. So kann bspw. der Browser mit einem klassischen Telefon, mit einem anderen PC-Browser oder einem mobilen Browser 'telefonisch' kommunizieren. Zu beachten dabei ist jedoch die Tatsache, dass jedes Endgerät unterschiedliche 'Fähigkeiten' oder Eigenschaften haben kann, nachdem die Audioströme kodiert werden.

Gebräuchliche Audio Codecs sind z.B. der G.711 mit 64kbit/s, der G.726 mit 32 kbit/s, der AMR Wideband Codec, OPUS Codec und andere.

Betrachtet man nun die Tatsache, dass jedes Endgerät unterschiedliche Codecs unterstützen kann, wird die Notwendigkeit deutlich, innerhalb der WebRTC-Architektur eine funktionale Komponente zur Verfügung zu stellen, welche dafür sorgt, diese unterschiedlichen Audio- oder Video-Codec-Eigenschaften der jeweiligen Endgeräte 'anzupassen' oder die Medienströme zu transkodieren. Diese funktionale Komponente wird als Media Gateway bezeichnet.

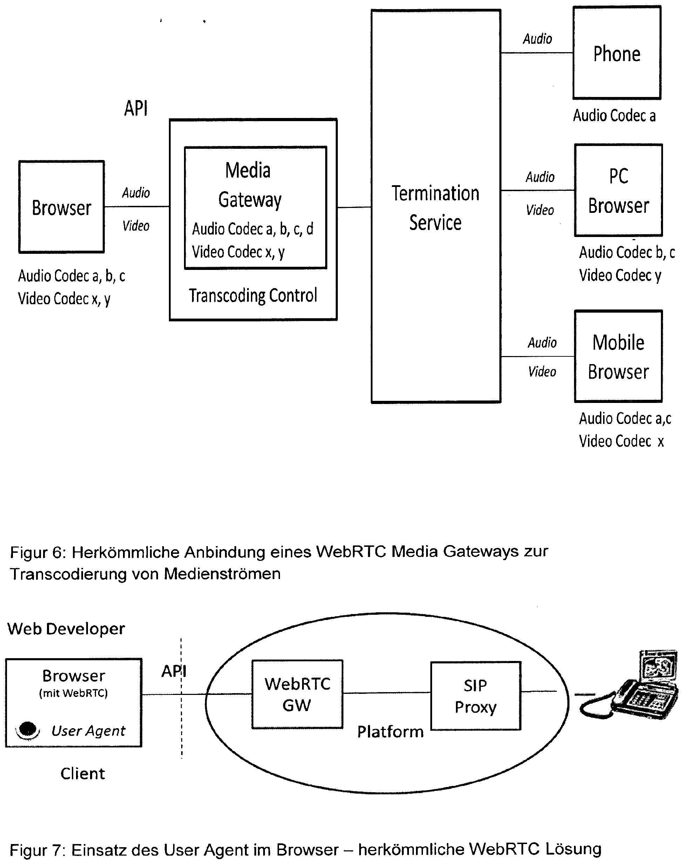

Figur 6 beschreibt das diesbezügliche Prinzip. Ein Media Gateway 'vermittelt' oder transkodiert dabei die Audio- und Videoströme beider Seiten. Dieses Gateway ist dabei in der Lage, die Eigenschaften beider Seiten abzufragen und somit eine Entscheidung zu treffen, welche Art der Transcodierung am besten anzuwenden ist, oder ob es im Falle sich gleichender Eigenschaften - beide Seiten verwenden denselben Codec - keiner Transcodierung bedarf.

Diese heute im Einsatz befindlichen Gateways gibt es in verschiedenen Ausprägungen - zum Beispiel als kommerzielles Produkt, wofür der Anwender einen Preis und zusätzliche Lizenzen je vermittelter Kapazität bezahlt oder auch in etwas 'abgespeckter' Form als Open Source Bibliotheken, welche kostenfrei in der Nutzung sind, dafür aber im Moment noch nicht die Funktionsvielfalt kommerzieller Produkte aufweisen.

Die im Folgenden aufgelisteten Patente beziehen sich alle auf die hier beschriebene Thematik im weiteren Sinne, ohne allerdings die in der vorliegenden Erfindungsbeschreibung beschriebenen Ansprüche vorwegzunehmen. Beispielhaft seien die folgenden Patentschriften aufgelistet:
Method and system for creating a virtual sip user agent by use of a webrtc enabled web browser - WO 2014060008 A1;
Method and device for transferring web real-time communication session - WO 2014075250 A1, CN103891246A;
Real time communication method, terminal device, real time communication server and system, WO 2014019497 A1, PCT/CN2013/080406, Verfahren zum Übertragen von Audiodaten und Kommunikationsgerät, WO 2013171247 A1, PCT/EP2013/060000, DE102012208099A1,
Intelligentes Benachrichtigen über Anforderungen von Echtzeit-Online-Interaktion über Echtzeitkommunikation und/oder Auszeichnungsprotokolle und verwandte Verfahren, Systeme und computerlesbare Medien; DE201310110574.

US 2014/222963 A1 beschreibt im Wesentlichen eine Netzwerkkomponente, die ein User Equipment (Browser) mit einem vorhandenen IMS-Netzwerk verbindet. Diese Verbindung ist als Session Border Controller ausgeführt und somit nur im Zusammenspiel mit einem IMS Core (siehe Abstract) funktionsfähig und versucht, WebRTC als User Equipment am IMS anzumelden.

KR2014/ 0053791 A Patent beschreibt im Wesentlichen eine Netzwerkkomponente, die ein User Equipment (Browser) mit einem vorhandenen IMS-Netzwerk verbindet. Diese Verbindung ist als Session Border Controller ausgeführt und somit nur im Zusammenspiel mit einem IMS Core funktionsfähig und versucht WebRTC als User Equipment am IMS anzumelden. Im Detail wird beschrieben, wie benötigte IMS-SIP-Nachrichten und andere benötigte IMS-Funktionen (z.B. HSS) bedient werden müssen.

### Überblick über die Erfindung:

Die vorliegende Erfindungsbeschreibung hat das Ziel, den Stand der Technik mit geeigneten Verfahren signifikant zu verbessern, so dass es einerseits möglich wird, WebRTC-Entwicklungen zu vereinfachen und zum anderen eine optimale Infrastruktur bereitzustellen, die es ermöglicht, verschiedene WebRTC-Kommunikationsszenarien kostengünstig, modular und erweiterbar umzusetzen.

Gegenstand der Erfindung ist eine funktionale Architektur, im Folgenden *ComX* genannt, welche unterschiedliche Aufgaben erfüllt. Sie dient als 'Vermittler' der Umsetzung unterschiedlicher WebRTC-basierter Kommunikationsszenarien.
Diese umfassen unter anderem
Audiokommunikation
- PC-Browser zu PC-Browser
- PC-Browser zu Mobil-Browser
- Browser (PC oder mobil) zu klassischem Festnetztelefon
- Browser (PC oder mobil) zu Mobiltelefon Videokommunikation
- PC-Browser zu PC-Browser
- PC-Browser zu Mobil-Browser
- Browser (PC oder mobil) zu videofähigen Telefonen Chat
- PC-Browser zu PC-Browser
- PC-Browser zu Mobil-Browser

Grundlage jeder der hier aufgeführten Kommunikationsszenarien ist der Einsatz der WebRTC-Technologie im Browser. Damit wird der Browser befähigt, als Telefon-, Video- oder Chat-'Endgerät' zu fungieren. Um eine tatsächliche Echtzeitkommunikation zu anderen Endgeräten zu ermöglichen, bedarf es noch bestimmter Funktionalitäten, welche den Verbindungsauf- und abbau, die Anbindung anderer Endgeräte, Verschlüsselung, und Medientransformationen umfassen. Zusammengefasst bedarf es für eine Umsetzung von kommerziellen WebRTC-Szenarien unter anderem folgender Funktionalitäten:
- Anbindung verschiedener Endgeräte und zugehöriger Infrastrukturen (bspw. IMS, PBX, Mobilfunknetz)
- Rufannahme und -vermittlung
- Medien-Transkodierung
- Signalisierung

Die vorliegende Erfindung beschreibt insbesondere, in welcher Art und Weise diese Funktionalitäten so gestaltet werden können, dass sie einen Effektivitätsgewinn, Kosteneinsparungen und Entwicklungssicherheit bieten. Die Darstellung der Erfindung ist jeweils in entsprechende Aspekte unterteilt
1. Einsatz von Konnektoren zur modularen Anbindung beliebiger Netzwerke oder Endgeräte
2. Einsatz eines cloudbasierten User Agenten (User Agent as a Service) zur Rufannahme und Vermittlung
3. Intelligenter Media-Gateway Switch zur effizienten Medien-Transkodierung
4. Einsatz von Device-Konnektoren, die mit speziellen Eigenschaften der vom Nutzer eingesetzten Endgeräte umgehen können.

Die bisherigen Verfahren und Realisierungen verwenden die WebRTC-Technologie in unterschiedlicher Ausprägung. In der hier aufgezeigten Erfindungsmeldung werden im Wesentlichen zwei Ansätze beschrieben, welche neu gegenüber dem heutigen Stand der Technik sind:

### 1. Allgemeine Architektur

- Einsatz von Konnektoren, im Besonderen Device-Konnektoren und Netzwerk-Konnektoren
- Einsatz eines Cloudbasierten User Agent (User Agent as a Service)

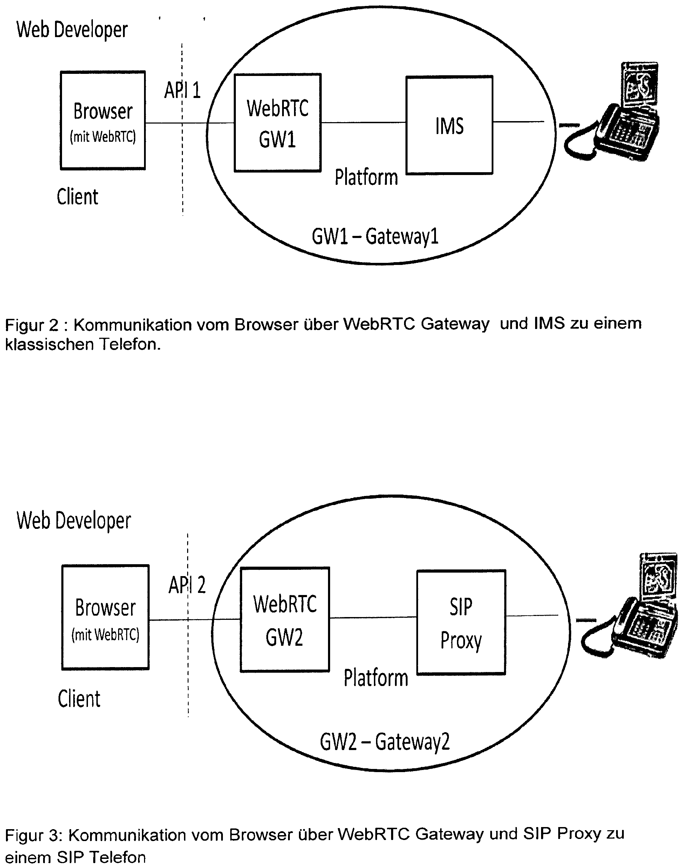

Betrachtet man Figur 2 und Figur 3, so wird ersichtlich, dass der Anwender (Web Developer) es je nach Anwendungsfall mit unterschiedlichen APIs zu tun haben kann, um seine Web Applikation so zu programmieren, dass sie mit dem jeweiligen Gateway (GW1 oder GW2) 'zusammenspielt'.

Außerdem wäre auch denkbar, dass bspw. die in Figur 3 gezeigte Variante sich in der Hinsicht ändern kann, dass ein Kunde zwar das Prinzip des Gateways beibehält, ABER den Gateway-Hersteller wechselt. Dann bekommt der Web Developer eine neue API und muss seine vorher mit API1 geschriebene Applikation umschreiben und auf API2 adaptieren.

Diese Änderung kostet Zeit, Geld und ist fehleranfällig.

Die wesentlichen Nachteile dieser herkömmlichen Lösung sind
1. Mit jedem API-Wechsel seitens Gateway-Hersteller muss der Web Developer noch einmal Hand anlegen und Zeit investieren, um seine Web-Applikation auf die neue API anzupassen.
2. Der API-Wechsel kann mit einem starken Einschnitt bei den vorhandenen Leistungsmerkmalen einhergehen. Zuvor bereitgestellte Dienste müssen möglicherweise beschnitten oder ganz entfernt werden. Der Web Developer steht vor dem Problem, dass er das Diensteangebot nicht mit gleichbleibendem Funktions- und Qualitätsumfang umsetzen kann.
3. Die API vieler Gateway-Hersteller ist rudimentär und auf protokollnahe Funktionen beschränkt. Der Web Developer benötigt ein hohes Maß an Know-How im Bereich Real-Time Communication, um die API korrekt zu benutzen. Weiterhin muss er für viele wünschenswerte Funktionen wie z.B. das Auswählen des korrekten Medien-Codecs entsprechend der Netzwerksituation des Endgeräts eigene Routinen entwerfen und implementieren, die aufgrund des fehlenden Know-Hows keine zufriedenstellende User Experience erzielen.
4. Der Browser ist mit einer Kommunikationsidentität verknüpft. Der User Agent wird im Endgerät instanziiert.
5. Starre Verknüpfung zwischen Device und Netzwerk
6. Zusätzliche Logik oder Fault Management muss im Zielnetzwerk implementiert werden.
7. Nutzerauthentifizierung wird im Device gemacht und ist somit anfällig gegen Angriffe

Die in dieser Erfindung erklärte Anordnung ist in dem Sinne neu, dass die erwähnte Anordnung (ComX) die Anbindung verschiedener und auch unterschiedlicher Plattformelemente (SIP-Gateway, PBX) übernimmt. Dabei werden diese Elemente durch Konnektoren angebunden, welche in diesem Sinne als 'Bindeglied' zwischen der ComX-Plattform und der jeweiligen Endgeräteplattform wirken. Somit können in der ComX-Plattform zusätzliche Komponenten oder Logik eingebaut werden, die gerade im mobilen Umfeld die Qualität und Erreichbarkeit der Nutzer verbessert.

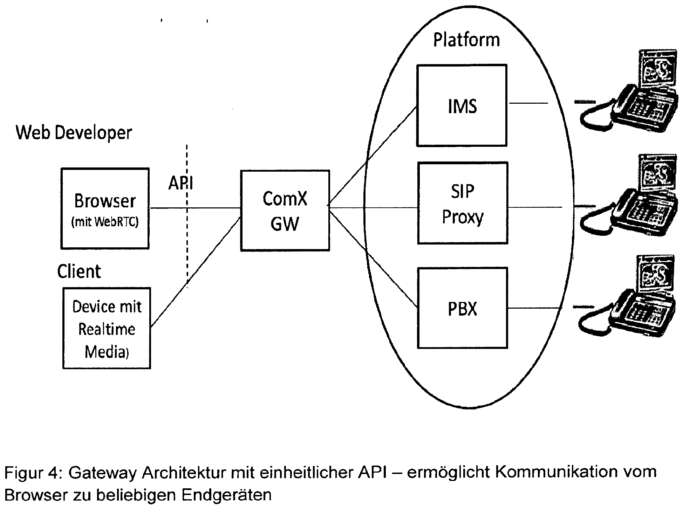

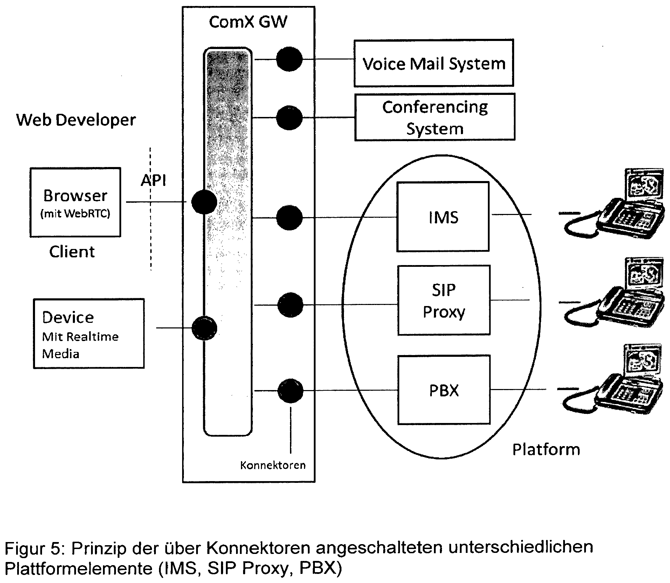

Figur 4 und Figur 5 zeigen das das prinzipielle Wirkprinzip dieser Anordnung, welche es ermöglicht, dem Anwender (Web Developer) unabhängig von der Plattformgestaltung, d.h. unabhängig davon ob eine PBX, ein SIP-Proxy oder andere Netzwerkkomponenten verwendet werden, immer eine gleichbleibende API mit gleichbleibendem Funktionsumfang zur Verfügung zu stellen. Gleichbleibend bedeutet in diesem Sinne, dass sich die API-Programmierschnittstelle auch bei Änderung der Plattformkomponenten nicht ändert. Damit gewinnt der Web-Entwickler eine hohe Anwendungssicherheit und wird von der Plattformentwicklung völlig entkoppelt.

Eine wesentliche Komponente aller Kommunikationsdienste ist der User Agent. Dies ist eine Funktionseinheit, welche bestimmte Aufgaben der Kommunikation übernimmt, wie bspw. NachrichtenAnnahme, Nachrichten-Weiterleitung oder Signalisierungsfunktionen. Diese funktionale Einheit wird in herkömmlichen WebRTC-basierten Kommunikationslösungen als Modul in den Browser integriert. Dies kann beispielsweise in Form eines Plug-Ins realisiert werden. Weiterhin kann der User Agent eine separate Anwendung sein, die auf einem Mobiltelefon, Tablet oder anderem Gerät ausgeführt wird.

Versucht bspw. der Nutzer B (Browser oder Telefon) den Nutzer A (Browser) anzurufen, nimmt der User Agent in seiner Funktion den Anruf an und leitet die entsprechenden Daten (u.a. Anrufer-Rufnummer) an die Browser-Applikation weiter. Die Applikation kann dann ihrerseits diese Information in geeigneten Art und Weise dem Nutzer visuell und akustisch darstellen.

Der Nachteil dieser Lösung ist, dass der Anruf nur zustande kommt, wenn der Browser geöffnet ist.

Neu gegenüber diesem Stand der Technik ist nun das Verfahren, den User Agent in einen hochverfügbaren Applikationsserver in einem Rechenzentrum (in die "Cloud") zu verlagern.

Dies bringt mehrere Vorteile:
- Der Anruf von Teilnehmer B zum Browser kann in jedem Fall entgegengenommen werden, unabhängig davon, ob der Browser geöffnet ist oder nicht, da sich der User Agent ja in der Cloud befindet und als Ansprechstelle immer aktiv ist.
- Bei Nichterreichbarkeit des Nutzers kann dynamisch reagiert werden und der Anruf oder die Nachricht weitergeleitet und auf geeigneten Speichergeräten (z.B. VoiceMail-System) angenommen und weiterverarbeitet werden.
- Darauf aufbauend lassen sich neue Dienste-Merkmale für webbasierte Kommunikationsdienste etablieren, wie bspw. ein Voicemail-Service. Wenn der A-Teilnehmer (Browser) nicht aktiv ist, kann trotzdem sein Anruf entgegengenommen und aufgezeichnet werden. Zu einem späteren Zeitpunkt, d.h. wenn der A-Teilnehmer seinen Browser öffnet, kann diesem angezeigt werden, dass eine Voicemail vorliegt.
- Weiterhin lassen sich damit auch für Chat-Dienste sogenannte Store- und Forward-Mechanismen einfach implementieren. Der immer aktive User Agent kann neben den Telefonanrufen auch Chat-Nachrichten empfangen und weiterleiten. Sollte der A-Teilnehmer nicht erreichbar sein, wird die Chat-Nachricht gespeichert (Store) und zu dem Zeitpunkt des Aktivierens des Browsers weitergeleitet (Forward)
- Bei mehreren gleichzeitig aktiven Devices eines Nutzers können diese parallel über Netzwerkereignisse benachrichtigt werden, ohne dass das Kommunikations-Netzwerk diese Funktion unterstützen muss.
- In den Device-Konnektoren können Funktionen abgebildet werden, wie z.B. Push Notification - und das für jedes Device unabhängig und individuell.
- Das Besondere hierbei ist, dass die o.g. Funktionen als Teil des Cloud-Services, welcher den User Agent bereitstellt, implementiert werden und nicht in der eigentlichen Kommunikationsplattform (bspw. PBX) vorhanden sein müssen. Im Gegensatz zu herkömmlichen Lösungen wird ein Dienstmerkmal von der Seite des User Agents und nicht von der Seite der Kommunikationsplattform bereitgestellt.

Gemäß den Ansprüchen handelt es sich vorzugsweise um ein Verfahren und Vorrichtung zur Steuerung von webbasierter Kommunikation, insbesondere einer Webbrowser-Kommunikation. Als Webbrowser sind die Programme zu verstehen, die oben aufgeführt wurden, insbesondere von Google und von Firefox, sowie von Microsoft. Ein weiterer Bestandteil der Erfindung ist ein Gateway, das vorzugsweise im Internet in Form einer Cloud angeordnet ist und eine API für die Integration einer Kommunikation mit einem Webbrowser bereitstellt, vorzugsweise nach WebRTC Standardt. Wie bereits oben ausgeführt wurde, definiert Microsoft einen eigenen Standard, der ebenfalls abgedeckt werden soll. Grundsätzlich geht es darum, dass über einen Webbrowser ohne ein weiteres zusätzliches Programm eine Sprach- und Videokommunikation in einfacher Form ermöglicht werden soll.

Über die API verbindet sich der Webbrowser mit dem Gateway. Damit eine Kommunikation mit anderen Endgeräten wie Telefonen, Telefonanlagen SIP Geräten ermöglicht wird, sind an das Gateway Konnektoren zur Anbindung von weiteren Plattformelementen anschließbar. Diese umfassen einen oder mehreren der folgenden: IP Multimedia Subsystem, PBX (Private Branch Exchange), SIP (Session Initiation Protocol), Proxy (IP Telefon/ Telefonanlage), Telefonanlage, Simple Conference mit Group-Call (Konferenzschaltungen), Voicemail-Systeme (Sprach- /Video-Aufzeichnungssystem) und andere.

Als Plug-In-fähige Konnektoren sollen solche Konnektoren bezeichnet werden, die als Module während des Betriebs des Gateways hinzugefügt werden können. Durch Anmeldung am Gateway können im laufenden Betrieb neue Konnektoren am Gateway angemeldet werden, so dass keinerlei Stillstandszeit für das Gateway besteht. Das Gateway weist definierte Schnittstellen und Konfigurationsparameter auf, die ein Anmelden der Konnektoren jederzeit erlauben.

Das Verfahren umfasst folgende Schritte:
- Aufbauen einer Kommunikationsverbindung des Webbrowsers über die API zum Gateway,
- Überprüfen des Kommunikationszieles durch das Gateway und Herstellen einer Kommunikationsverbindung zwischen der API und einem Konnektor, der einem Plattformelement zugeordnet ist,
- Aufbauen einer Kommunikationsverbindung zwischen dem Konnektor und dem Plattformelement,
- Übertragen von Kommunikationsinformationen zwischen dem Webbrowser, dem Plattformelement über die API, dem Gateway und dem Konnektor, wobei die Kommunikationsinformationen durch den Konnektor angepasst werden.

In einer bevorzugten Ausführungsform werden Konnektoren im Betrieb des Gateways angemeldet, ausgetauscht oder abgeschaltet, ohne dass dabei die verbleibende Funktionalität, insbesondere die API, des Gateways beeinträchtigt wird, wobei die Konnektoren vorzugsweise Softwaremodule sind, die in das Gateway als Plug-In integriert werden. In einer alternativen Ausführungsform sind die Softwaremodule zusätzlich mit einem Hardwaremodul verbunden, um die Funktionalität bereitzustellen. Die Schnittstelle zum Gateway wird jedoch vorzugsweise durch Software bereitgestellt, die wiederum einen Zugang zur Hardware erlaubt.

In einer weiteren Ausführungsform stellt das Gateway in Verbindung mit den Konnektoren eine oder mehrere der folgenden Funktionen bereit:
- Parallel Ringing, so dass alle für einen Nutzer angemeldeten Endgeräte gleichzeitig über Netzwerkereignisse angesprochen werden, so dass der Nutzer entscheiden kann, mit welchen Endgerät er auf diese Ereignisse reagiert; hierbei können unterschiedlichste Telefone oder Geräte gemeint sein, insbesondere Mobiltelefone oder Festnetztelefone oder auch Browser. Ein Benutzer kann ein entsprechendes Profil hinterlegen, das vom Gateway verwaltet wird und zum Beispiel immer dann aktiviert wird, wenn der Nutzer dies wünscht oder der Browser abgemeldet ist bzw. der Browser angemeldet ist. In Abhängigkeit von unterschiedlichen Statussituationen der Endgeräte kann ein paralleles Klingeln definiert werden.
- Handover, wobei der Nutzer während einer Kommunikationsverbindung das Endgerät wechselt, ohne dass die Kommunikationsverbindung abbricht; hierzu stellt das Gateway vorzugsweise eine Schnittstelle bereit, die auch über den Browser definiert werden kann, oder es können bestimmte Tastencodes eingegeben werden, so dass ein Nutzer mit einem anderen Endgerät weiter kommunizieren kann. Vorzugsweise sind solche Profile ebenfalls spezifisch für einen Nutzer auf dem Gateway abgelegt und editierbar, bspw. über eine Web-Schnittstelle. Ferner ist zu beachten, dass das Gateway die Verbindung weiterhin aufrechterhält, so dass während eines Handovers, an der gleichen Stelle eine Fortführung der Verbindung durchgeführt werden kann. Sollten zum Beispiel die Codecs sich verändern, so wird dies den entsprechenden Konnektoren mitgeteilt, damit diese in Zukunft andere Codecs für die Audio- oder Videoübertragung verwenden.
- Conferencing Dienst, so dass ohne weitere Konfiguration oder Hinzunahme einer weiteren Software-Komponente Audio- oder Video-Konferenzen erzeugt werden können. Diese können als Group Call oder Dial-in stattfinden, wobei das Conferencing vorzugsweise als eigenständiger Konnektor ausgeführt ist, hierbei ist es möglich, dass der Benutzer über einen Webbrowser und eine spezifische Schnittstelle des Gateways weitere Teilnehmer einlädt. Alternativ kann die Schnittstelle anzeigen, wenn andere Teilnehmer sich eingeloggt haben oder sich einloggen wollen. Die Konferenzen werden in der Regel durch Passwörter bzw. einmalige Codes geschützt, so dass nur die Personen Zutritt haben, die einen entsprechenden Code haben. Alternativ können die Teilnehmer auch eingeladen werden indem entsprechende Einladungsanfragen an diese übermittelt werden. Auch hierbei übernimmt das Gateway die Funktionalität und gegebenenfalls über eine Schnittstelle auch die Steuerung, wobei die entsprechenden Konnektoren mit einbezogen werden.
- Ändern von Medien-Codecs während einer Verbindung, als Reaktion auf Veränderungen des Netzwerkes. Hierbei wird überprüft, ob die Verbindung eine ausreichende Bandbreite und Qualität aufweist, um mit entsprechenden Codecs zu arbeiten. Sollten sich Qualitätsschwankungen einstellen, so wird der Codec gewählt, der sicherstellt, dass eine akzeptable Übertragung erfolgen kann. Sollte die Qualität der Verbindung sich verbessern, so wird ein entsprechender Codec ausgewählt, der eine höhere Qualität bei der Übertragung sicherstellt. Das entsprechende gilt für eine Verschlechterung der Verbindungsqualität, bei der dann entsprechende Codecs eingesetzt werden, die eine geringere Bandbreite benötigen.
- Adpush wobei Audio- oder Video-Zusatzinformationen vorzugsweise beim Aufbau der Kommunikationsverbindung oder auch im Konferenzdienst angezeigt werden. Zusätzlich können beim Aufbau einer Verbindung Werbung oder Zusatzinformationen eingespielt werden, die sowohl akustisch als auch visuell übertragen werden können. Das Einspielen kann natürlich auch in bestimmten Abständen regelmäßig vorgenommen werden, insbesondere dann, wenn Video-Inhalte übertragen werden, die nicht zwangsweise echtzeitrelevant sind bzw. bei denen es vertretbar ist, dass Unterbrechungen stattfinden. So ist es denkbar, dass bestimmte hochqualitative Dienstleistungen nur dann bereitgestellt werden, wenn regelmäßig Werbung in einem bestimmten zeitlichen Abstand eingespielt wird. Diese Aufgabe übernimmt das Gateway in Verbindung mit den Konnektoren.

In einer weiteren Ausführungsform gibt es Device Konnektoren, welche die Nutzererfahrung bereitstellen.

In einer weiteren Ausführungsform umfassen die Konnektoren und/oder das Gateway mindestens einen Agent, der die Funktion einer Nachrichtenannahme und/oder -weitervermittlung übernimmt, insbesondere in Abhängigkeit der Verfügbarkeit des Endgerätes.

Der Agent ist in der Regel Teil des Konnektors, um spezifisch für die Endgeräte eine Funktionalität bereitzustellen.

So stellt der Agent im Bereich der Telefonie, vorzugsweise in Abhängigkeit der Erreichbarkeit, eine oder mehrere der folgenden Funktionen bereit:
- Annahme der Rufinformationen, insbesondere wer will wen anrufen;
- Ruf-Vermittlung an das anzurufende Endgerät,
- Speicherung der Rufparameter;
- Speicherung des Anrufwunsches für den Fall, dass der Browser nicht aktiv ist;
- Überwachung des Aktivitätszustandes des Webbrowsers, ob dieser online oder offline ist;
- Signalisierung eines Verbindungswunsches an den Webbrowser, wenn dieser nach einem Offline-Zustand wieder in den Online-Zustand wechselt und im Falle des Offline-Zustandes ein eingehender Anruf an den Browser erkannt wurde;
- Aufzeichnen von an den Webbrowser gerichtete Anrufe im Falle des Offline-Zustandes des Browsers;
- Verwendung von Push-Technologien, um Endgeräte, wie Smartphones und Tablets über den eingehenden Anruf zu informieren;
- Übertragen der Mediendaten mit einer erhöhten Sicherheit, insbesondere verschlüsselt,
- Bereitstellen einer Liste der aufgezeichneten Anrufe für den Webbrowser;
- Bereitstellen einer Voicemail-Funktionalität für den Webbrowser;
- Bereitstellen einer Rückruf-Funktion für eingegangene Anrufe für den Webbrowser;
- Bereitstellen eines Smart Handover zwischen den Endgeräten;
- Lazy Connect, um dynamisch auf Netzwerkänderungen zum Nutzer Endgerät zu reagieren
- Adpush, um Audio- oder Video-Medien in bestimmten Situationen einzuspielen.

Im Bereich der Videotelefonie übernimmt der Agent eine oder mehrere der folgenden Funktionen:
- Annahme der Video-Call-Informationen, insbesondere, wer will wen anrufen;
- Video-Call-Vermittlung an das anzurufende Endgerät
- Speicherung der Video-Call-Parameter;
- Speicherung des Video-Anrufwunsches für den Fall, dass der Webbrowser nicht aktiv ist;
- Überwachung des Aktivitätszustandes des Browsers insbesondere ob online / offline;
- Signalisierung eines Video-Call-Wunsches an den Webbrowser, wenn dieser nach einem Offline-Zustand wieder in den Online-Zustand wechselt und im Falle des Offline-Zustandes ein eingehender Video-Call an den Browser erkannt wurde;
- Aufzeichnen von eingehenden, an den Webbrowser gerichteten Video-Call-Anrufen - im Falle des Offline-Zustandes des Browsers, wobei sowohl die Bild- als auch die Audio-Information gespeichert wird;
- Verwenden einer Push-Technologie, um Endgeräte wie Smartphones und Tablets über den eingehenden Anruf zu informieren;
- Übertragen von Mediendaten mit einer erhöhten Sicherheit, insbesondere verschlüsselt;
- Bereitstellen einer Liste der aufgezeichneten Video-Calls;
- Bereitstellen einer Videomail-Funktionalität für den Webbrowser;
- Bereitstellen einer Rückruf-Funktion für eingegangene Video-Calls für den Browser.

Im Bereich der Chat-Kommunikation übernimmt der Agent eine oder mehrere der folgenden Funktionen:
- Annahme der Chat-Informationen, wer will mit wem chatten;
- Chat-Vermittlung an den Ziel-Browser;
- Speicherung der Chat-Parameter;
- Speicherung des Chat-Wunsches für den Fall, dass der Ziel-Browser nicht aktiv ist;
- Überwachung des Aktivitätszustandes des Ziel-Browsers, insbesondere ob dieser online und/oder offline ist;
- Signalisierung eines Chat-Wunsches an den Ziel-Browser wenn dieser nach einem Offline-Zustand wieder in den Online-Zustand wechselt und im Falle des Offline-Zustandes ein am Browser eingehender Chat erkannt wurde;
- Aufzeichnen einer eingehenden, an den Ziel-Browser gerichteten Chat-Nachricht - im Falle des Offline-Zustandes des Browsers, wobei sowohl die Nachricht, als auch der Absender gespeichert wird;
- Möglichkeit, Push-Technologien zu verwenden, um Endgeräte wie Smartphones und Tablets über die eingehenden Nachrichten zu informieren, obwohl die eigentliche Kommunikationsplattform dies nicht unterstützt;
- Übertragung der Nachrichten mit einer erhöhten Sicherheit, insbesondere verschlüsselt;
- Bereitstellen einer Liste der aufgezeichneten Chat-Nachrichten und -Initiatoren nach dem Wechsel vom Offline- in den Online-Zustand für den Browser;
- Bereitstellen einer Chat-Rückantwort-Funktion für eingegangene Chat-Nachrichten für den Browser.

Ein weiterer Teil der Erfindung ist eine Vorrichtung zur Steuerung von webbasierter Kommunikation, umfassend: Ein Gateway (ComX), das eine API für die Integration einer Kommunikation mit einem Webbrowser bereitstellt, vorzugsweise nach WebRTC Standardt, umfassend, eine Konfiguration um Plug-In-fähige Konnektoren zur Anbindung von weiteren Plattformelementen zu integrieren, wobei die Plattformelemente eine oder mehrere der folgenden sind:
IP Multimedia Subsystem, PBX, SIP Proxy, Telefonanlage, Simple-Conference mit Group-Call, Voicemail-Systeme.
- Das Gateway umfasst Netzwerkschnittstellen so dass Webbrowser, über die API zugreifen können.
- Das Gateway umfasst Netzwerkschnittstellen zu Plattformelementen.
- Das Gateway umfasst eine Verarbeitungseinheit zum Aufbauen einer Kommunikationsverbindung des Webbrowsers über die API zum Gateway mit Hilfe der Netzwerkschnittstellen.

Die Verarbeitungseinheit ist eingerichtet:
- zum Überprüfen des Kommunikationszieles durch das Gateway und Herstellen einer Kommunikationsverbindung zwischen der API und einem Konnektor, der einem Plattformelement zugeordnet ist,
- zum Aufbauen einer Kommunikationsverbindung zwischen dem Konnektor und dem Plattformelement,
- zum Übertragen von Kommunikationsinformationen zwischen dem Webbrowser und dem Plattformelement über die API, das Gateway und den Konnektor, wobei die Kommunikationsinformationen durch den Konnektor angepasst werden

Hierbei handelt es sich in der Regel um einen Server oder eine Vielzahl von Servern, die im Internet angeordnet sind bzw. mit dem Internet an einer zentralen Stelle in Verbindung stehen, und die die entsprechenden Dienste, wie sie auch durch die Verfahren oben beschrieben wurden, bereitstellen. Die Server weisen Prozessoren mit Arbeitsspeicher und Festplattenspeicher auf, auf denen Betriebssystemen wie Linux, Unix, Windows oder ähnliches arbeitet. Die entsprechende Software, die auf diesem Server läuft, stellt entsprechende Schnittstellen über das Netzwerk zu den Konnektoren und der API bereit.

### Figuren-Beschreibung:

Im Folgenden werden die Figuren kurz beschrieben.
Figur 1 zeigt die prinzipielle Darstellung und deren Layer der browserbasierten WebRTC-Technologie.
Figur 2 zeigt die Kommunikation vom Browser über das WebRTC Gateway und IMS zu einem klassischen Telefon;
Figur 3 zeigt die Kommunikation vom Browser über das WebRTC Gateway und SIP-proxy zu einem SIP Telefon;
Figur 4 zeigt die Gateway Architektur mit einheitlicher API, die es ermöglicht, eine Kommunikation vom Browser zu beliebigen Endgeräten zu führen;
Figur 5 zeigt das Prinzip der über Konnektoren zugeschalteten unterschiedlichen Plattformelemente;
Figur 6 zeigt die herkömmliche Anmeldung eines WebRTC Media Gateways zum Transkodieren von Medienströmen;
Figur 7 zeigt den Einsatz der Agenten im Browser bei einer WebRTC-Lösung gemäß der Erfindung;

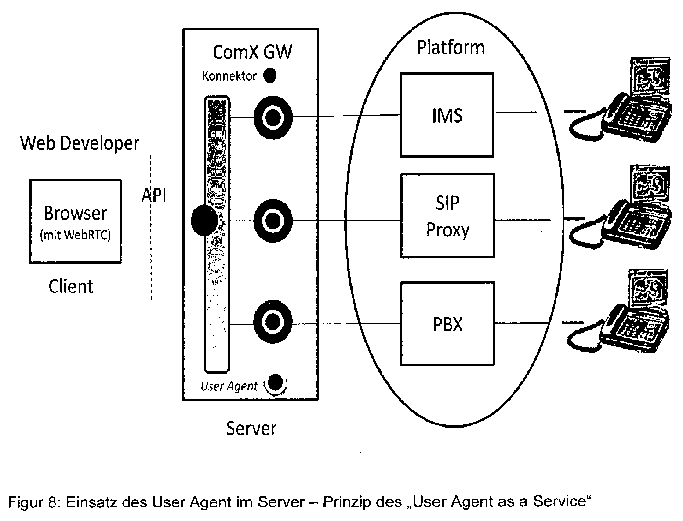

Figur 8 zeigt den Einsatz der Agenten im Gateway bzw. im Server, wodurch das Prinzip des Agenten als ein Dienst implementiert wird, hierbei läuft der Agent auf dem Gateway selbst;

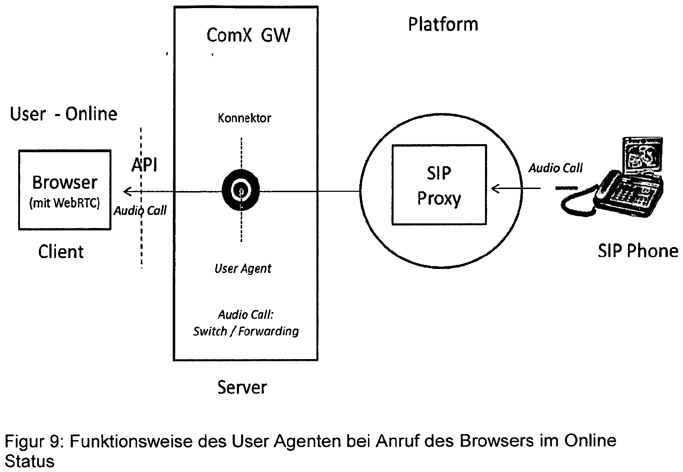

Figur 9 zeigt die Funktionsweise des Agenten bei einem Anruf des Browsers im Online-Status;

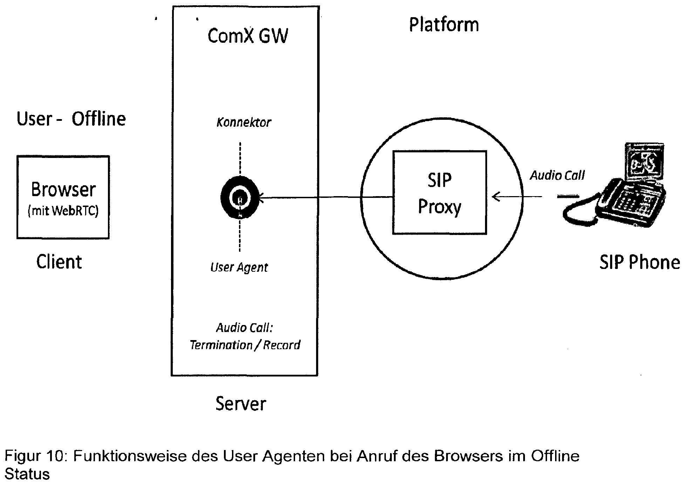

Figur 10 zeigt die Funktionsweise des Agenten bei einem Anruf des Browsers im Offline-Status;

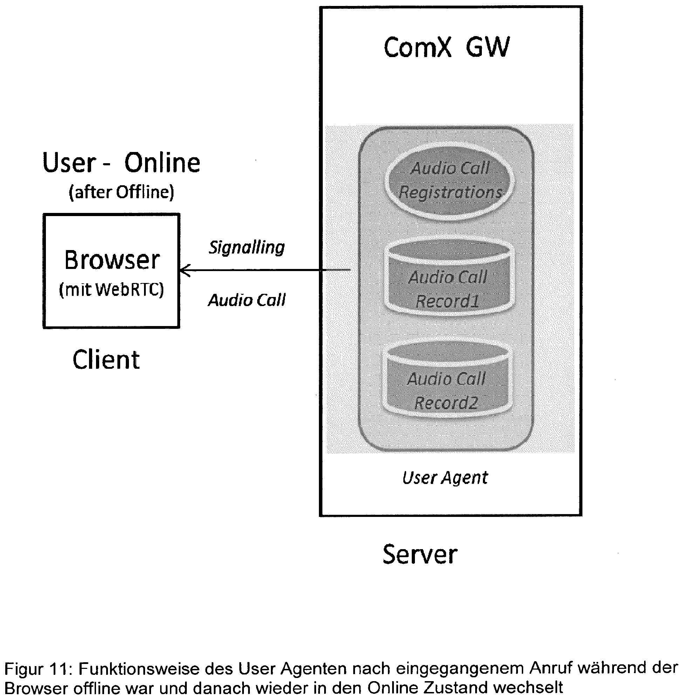

Figur 11 zeigt die Funktionsweise des Agenten nach einem eingegangen Anruf während der Browser offline war und danach wieder in den Online-Zustand wechselt.

### Beschreibung der detaillierten Ausführungsform:

Figur 4 beschreibt einen wesentlichen Teil der Erfindung. Die mit ComX bezeichnete Plattform ermöglicht die Anbindung verschiedener Systeme auf der dem Browser 'gegenüberliegenden' Kommunikationsseite. Damit wird es erstmals ermöglicht, dass der Applikationsentwickler, welcher die Kommunikationsschnittstelle (API) in seine Applikation einbindet, sich nur einmal Gedanken über die Entwicklung machen muss.

Im Gegensatz zu den in Figur 2 und Figur 3 dargestellten Szenarien, wird der Entwickler bei der Änderung nicht mit einer möglichen Änderung der API konfrontiert.

Die hier vorgestellte Erfindung ermöglicht also beliebige Änderungen der Kommunikations-Infrastruktur und der dazugehörigen Schnittstellen auf der 'rechten Seite' OHNE, dass der Applikations-Entwickler seine gemachten Entwicklungen ändern muss.

Figur 5 beschreibt dabei das Prinzip im Detail. Um eine möglichst flexible Lösung in Bezug auf mögliche Änderungen oder Ergänzungen der Plattformelemente zu erreichen, wurde innerhalb der hier beschriebenen Erfindung das Prinzip der Konnektoren entwickelt.

Dieses Prinzip ist dadurch gekennzeichnet, dass das zentrale Gateway (ComX Gateway) je nach Bedarf verschiedene Konnektoren bereitstellt, über die sich dann beispielsweise entweder eine IMS-Infrastruktur, ein SIP-Proxy oder eine PBX-Anlage anbinden lässt. Diese Konnektoren werden im Allgemeinen in Zusammenarbeit zwischen dem Anbieter des Plattformelements und dem (ComX) Gateway-Anbieter entwickelt und bereitgestellt, was im Normalfall einen überschaubaren Aufwand darstellt.

Der Nutzen ist erheblich, da die Konnektoren alle Spezifika des jeweiligen Plattformelementes berücksichtigen und diese nicht wie herkömmlich üblich über eine API an den Web-Entwickler 'weitergereicht' werden. Der für den Browser entwickelten Applikation ist es damit quasi 'egal', was auf der Plattformseite passiert, sie bleibt davon völlig unberührt.

Zusätzlich werden Funktionen ermöglicht wie Parallel Ringing, so dass alle angemeldeten Nutzer-Instanzen gleichzeitig über Netzwerkereignisse (z.B. Call oder Chat) notifiziert werden. Somit kann der Nutzer entscheiden, mit welchem Device er auf diese Ereignisse reagiert.

Handover-Szenarien werden transparent für das Kommunikationsnetzwerk abgebildet. Der Nutzer kann z.B. während eines Calls das Device wechseln, ohne dass dieser abbricht oder das Kommunikationsnetzwerk hierfür Logik implementieren muss.

Im mobilen Umfeld kann ComX auf Netzwerkveränderungen reagieren. Hier können bei Netzwerkänderungen zum Nutzer Medien-Codecs geändert werden oder z.B. Anrufe transparent für das Kommunikations-Netzwerkan andere Devices oder Kommunikationsnetzwerke transferiert werden. Bei Netzwerkverlust zum Nutzer-Device können Verbindungen in ComX gehalten und auf Neuverbinden des Nutzers gewartet werden. Somit brechen z.B. die Gespräche nicht einfach ab, sondern können dynamisch verwaltet werden.

Ein eingebauter Conferencing-Dienst ermöglicht es dem Applikationsentwickler, ohne weitere Konfiguration oder Hinzunahme einer weiteren Software-Komponente Audio- oder Video-Konferenzen zu erzeugen. Diese können als Group Call (mehrere Nutzer gleichzeitig anrufen) oder Dial-in (Nutzer wählen sich aktiv ein) stattfinden. Das Conferencing ist genauso als Konnektor ausgeführt und kann durch beliebige Technologie ermöglicht werden. Für den Applikationsentwickler stellt sich die Funktionalität immer unter derselben API zur Verfügung.

Adpush ermöglicht Audio- oder Video-Advertisement, z.B. beim Call-Aufbau oder auch in Konferenz-Situationen.

Im Folgenden wird auf den cloudbasierten User Agent eingegangen:
Figur 8, Figur 9, Figur 10 und Figur 11 beschreiben in ihrer Darstellung die Funktionsweise des cloudbasierten User Agenten.

Figur 8 zeigt das allgemeine Wirkprinzip, bei dem der User Agent als zentrales Element zur Nachrichtenannahme und - weitervermittlung als Bestandteil des ComX Gateways serverbasiert in der Cloud eingesetzt ist.

Figur 9 zeigt, wie der User Agent reagiert, wenn von einem SIP-Telefon ein Anruf an den Browser getätigt wird. Der User Agent nimmt dabei den Anrufwunsch des SIP-Telefons entgegen, prüft ob der Zielteilnehmer (Browser) verfügbar ist und leitet den Anruf in diesem Beispiel an den Browser weiter, da dieser auf Grund seines Online-Status' auch erreichbar ist.

Figur 10 beschreibt den Fall, dass ein Anrufwunsch des SIP-Telefons nicht weitergeleitet werden kann, da sich der Browser im Offline-Zustand befindet, d.h. der Nutzer mit seinem Browser gerade nicht mit dem Internet verbunden ist. In diesem Fall wird der Anrufwunsch des SIP-Telefons auch entgegengenommen, es kann jedoch dynamisch entschieden werden, was mit dem Call passieren soll. So sind Weiterleitungen oder Push-Notifikationen möglich.

Hier kann auch die Weiterleitung an ein VoiceMail-System realisiert werden. Dieses kann dann den Nutzer bei erneutem Verbinden über entgangene Audio- oder Video-Calls notifizieren.

Diese Nachricht wird zusammen mit den Parametern des Anrufers (z.B. Telefonnummer) gespeichert und ist so für einen späteren Zeitpunkt, wenn der Browser wieder online ist, verfügbar. Dies bedeutet praktisch, dass trotz Offline-Status des Browsers der Anruf nicht verlorengeht, wie es in herkömmlichen WebRTC-Anwendungen der Fall ist.

Figur 11 beschreibt die Situation, wenn der Browser nach einem Offline-Status wieder online 'geht', d.h. sich mit dem Internet verbindet.

Dieser Zustandswechsel löst im User Agent ein Event aus, welches dem User Agenten signalisiert, dass der Browser wieder online ist. Daraufhin signalisiert der User Agent dem Browser, dass es in der Zwischenzeit, während seines Offline-Zustandes einen Anrufwunsch von dem entsprechenden SIP-Telefon-Nutzer gab.

Falls es mehrere Anrufversuche in der Zwischenzeit gab, kann der User Agent dem Browser auch eine Liste der entgangenen Anrufe übermitteln.

Der Browser ist daraufhin in der Lage, die entgangenen Anrufe einzeln abzuhören, da diese durch den User Agenten aufgezeichnet und gespeichert wurden. (Voicemail-Funktion)

Dieses Wirkprinzip ist neben der reinen Telefonie auch für Videotelefonate oder Chat-Nachrichten anwendbar.

Im Folgenden wird die allgemeine Architektur - Einsatz eines cloudbasierten User Agenten - beschrieben.

So erfolgt eine Verlagerung des User Agenten vom Browser in die Cloud (auf einen hochverfügbaren, jederzeit erreichbaren Applikationsserver).

Es ist eine Anwendung in Realtime-Media-basierten Kommunikationsszenarien gegeben.

Es ist ein Einsatz eines cloudbasierten User Agenten gegeben, welcher zentrale Funktionen im Netz bereitstellt und somit browserspezifische Implementierungen vermeidet. Dabei übernimmt der User Agent verschiedene Funktionen. Im Bereich der reinen Telefonie sind dies eine oder mehrere der folgenden Funktionen:
- Annahme der Rufinformationen (wer will wen anrufen, z.B. Browser will Telefon anrufen oder Telefon will Browser anrufen)
- Ruf-Vermittlung an das anzurufende Endgerät
- Speicherung der Rufparameter
- Speicherung des Anrufwunsches (Telefon will Browser anrufen) für den Fall, dass der Browser nicht aktiv ist
- Überwachung des Aktivitätszustandes des Browsers (online / offline)
- Signalisierung eines Anrufwunsches an den Browser, wenn dieser nach einem Offline-Zustand wieder in den Online-Zustand wechselt und im Falle des Offline-Zustandes ein am Browser eingehender Anruf erkannt wurde
- Möglichkeit, eingehende, an den Browser gerichtete Anrufe - im Falle des Offline-Zustandes des Browsers - aufzuzeichnen
- Möglichkeit, Push-Technologien zu verwenden, um Endgeräte wie Smartphones und Tablets über den eingehenden Anruf zu informieren, obwohl die eigentliche Kommunikationsplattform dies nicht unterstützt
- Möglichkeit, die Mediendaten mit einer erhöhten Sicherheit (Verschlüsselung) zu übertragen
- Möglichkeit, dem Browser eine Liste der aufgezeichneten Anrufe bereitzustellen
- Möglichkeit, dem Browser eine Voicemail-Funktionalität bereitzustellen
- Möglichkeit, dem Browser eine Rückruf-Funktion für eingegangene Anrufe bereitzustellen
- Smart Handover zwischen den Endgeräten
- Lazy Connect um dynamisch auf Netzwerkänderungen zum Nutzer Device zu reagieren
- Adpush um Audio oder Video Medien in bestimmten Situationen einzuspielen

Im Bereich der Videotelefonie übernimmt der User Agent eine oder mehrere der folgenden Funktionen:
- Annahme der Video-Call-Informationen (wer will wen anrufen, z.B. Browser will Video-Telefon anrufen oder Video-Telefon will Browser anrufen oder Videotelefonie von Browser zu Browser)
- Video-Call-Vermittlung an das anzurufende Endgerät
- Speicherung der Video-Call-Parameter
- Speicherung des Anrufwunsches (Video-Telefon will Browser anrufen) für den Fall, dass der Browser nicht aktiv ist
- Überwachung des Aktivitätszustandes des Browsers (online / offline)
- Signalisierung eines Video-Call-Wunsches an den Browser, wenn dieser nach einem Offline-Zustand wieder in den Online-Zustand wechselt und im Falle des Offline-Zustandes ein eingehender Video-Call an den Browser erkannt wurde
- Möglichkeit, eingehende, an den Browser gerichtete Video Calls - im Falle des Offline-Zustandes des Browsers - aufzuzeichnen. Dabei wird sowohl die Bild- als auch die Audio-Information gespeichert
- Möglichkeit, Push-Technologien zu verwenden, um Endgeräte wie Smartphones und Tablets über den eingehenden Anruf zu informieren, obwohl die eigentliche Kommunikationsplattform dies nicht unterstützt
- Möglichkeit, die Mediendaten mit einer erhöhten Sicherheit (Verschlüsselung) zu übertragen
- Möglichkeit, dem Browser eine Liste der aufgezeichneten Video-Calls bereitzustellen
- Möglichkeit, dem Browser eine Videomail-Funktionalität bereitzustellen
- Möglichkeit, dem Browser eine Rückruf-Funktion für eingegangene Video Calls bereitzustellen

Im Bereich der Chat-Kommunikation übernimmt der User Agent eine oder mehrere der folgenden Funktionen:
- Annahme der Chat-Informationen (wer will mit wem chatten - welcher Browser will mit welchem Browser chatten)
- Chat-Vermittlung an den Ziel-Browser
- Speicherung der Chat-Parameter
- Speicherung des Chat-Wunsches für den Fall, dass der Ziel-Browser nicht aktiv ist
- Überwachung des Aktivitätszustandes des Ziel-Browsers (online / offline)
- Signalisierung eines Chat-Wunsches an den Ziel-Browser, wenn dieser nach einem Offline-Zustand wieder in den Online-Zustand wechselt und im Falle des Offline-Zustandes ein eingehender Chat an den Browser erkannt wurde
- Möglichkeit, eingehende, an den Ziel-Browser gerichtete Chat-Nachrichten - im Falle des Offline-Zustandes des Browsers - aufzuzeichnen. Dabei wird sowohl die Nachricht, als auch der Absender gespeichert.
- Möglichkeit, Push-Technologien zu verwenden, um Endgeräte wie Smartphones und Tablets über die eingehenden Nachrichten zu informieren, obwohl die eigentliche Kommunikationsplattform dies nicht unterstützt
- Möglichkeit, die Nachrichten mit einer erhöhten Sicherheit (Verschlüsselung) zu übertragen
- Möglichkeit, dem Browser eine Liste der aufgezeichneten Chat Nachrichten und - Initiatoren nach dem Wechsel vom Offline- in den Online-Zustand bereitzustellen (Store-and-Forward-Prinzip)
- Möglichkeit, dem Browser eine Chat-Rückantwort-Funktion für eingegangene Chat-Nachrichten bereitzustellen

## Patentansprüche

1. Verfahren zur Steuerung von webbasierter Kommunikation, nutzend:
Ein Gateway (ComX), das eine API für die Integration einer Kommunikation mit einem Webbrowser nach dem WebRTC Standard bereitstellt, umfassend eine Vielzahl von Plug-In-fähigen Konnektoren zur Anbindung von weiteren Plattformelementen an das Gateway, umfassend eines oder mehrere der folgenden:
IP Multimedia Subsystem, PBX, SIP Proxy, Telefonanlage, Simple Conference mit Group- Call, Voicemail-Systeme; umfassend folgende Schritte:
- Aufbauen einer Kommunikationsverbindung des Webbrowsers über die API zum Gateway,
- Überprüfen des Kommunikationszieles durch das Gateway und Herstellen einer Kommunikationsverbindung zwischen der API und einem Konnektor aus der Vielzahl von Konnektoren, der einem Plattformelement zugeordnet ist,
- Aufbauen einer Kommunikationsverbindung zwischen dem Konnektor und dem Plattformelement,
- Übertragen von Kommunikationsinformationen zwischen dem Webbrowser und dem Plattformelement über die API, das Gateway und den Konnektor, wobei die Kommunikationsinformationen durch den Konnektor angepasst werden,
wobei Konnektoren im Betrieb des Gateways angemeldet, ausgetauscht oder abgeschaltet werden, wobei die Konnektoren Softwaremodule sind, die in das Gateway als Plug-ins integriert werden und jeder aus der Vielzahl von Konnektor über die gleiche einheitlich API des Gateways durch den Webbrowser ansprechbar ist.

2. Verfahren nach dem vorhergehenden Anspruch , wobei das Gateway in Verbindung mit den Konnektoren eine oder mehrere der folgenden Funktionen bereitstellt:
- Parallel Ringing, so dass alle für einen Nutzer angemeldeten Endgeräte gleichzeitig über Netzwerkereignisse angesprochen werden, so dass der Nutzer entscheiden kann, mit welchen Endgerät er auf diese Ereignisse reagiert;
- Handover, wobei der Nutzer während einer Kommunikationsverbindung das Endgerät wechselt, ohne dass eine Kommunikationsverbindung abbricht;
- Conferencing-Dienst ohne weitere Konfiguration oder Hinzunahme einer weiteren Software-Komponente mit dem Audio- oder Video-Konferenzen erzeugt werden, diese können als Group- Call oder Dial-in stattfinden, wobei das Conferencing vorzugsweise als eigenständiger Konnektor ausgeführt ist,
- Ändern von Medien-Codecs während einer Verbindung, als Reaktion auf Veränderungen des Netzwerkes,
- Adpush, wobei Audio- oder Video-Zusatzinformationen vorzugsweise beim Aufbau der Kommunikationsverbindung oder auch im Konferenzdienst angezeigt werden.

3. Verfahren nach einem oder mehreren der vorhergehenden Ansprüche, wobei Device-Konnektoren benutzt werden, welche die Nutzererfahrung bereitstellen.

4. Verfahren nach einem oder mehreren der vorhergehenden Ansprüche, wobei die Konnektoren und/oder das Gateway mindestens einen Agenten umfassen, der die Funktion einer Nachrichtenannahme und/oder -Weitervermittlung übernimmt, insbesondere in Abhängigkeit der Verfügbarkeit des Endgerätes.

5. Das Verfahren nach Anspruch 4, wobei der Agent im Bereich der Telefonie, vorzugsweise in Abhängigkeit der Erreichbarkeit, eine oder mehrere der folgenden Funktionen bereitstellt:
- Annahme der Rufinformationen, insbesondere wer will wen anrufen;
- Ruf-Vermittlung an das anzurufende Endgerät;
- Speicherung der Rufparameter;
- Speicherung des Anrufwunsches für den Fall, dass der Browser nicht aktiv ist;
- Überwachung des Aktivitätszustandes des Webbrowsers, ob dieser online oder offline ist;
- Signalisierung eines Verbindungswunsches an den Webbrowser, wenn dieser nach einem Offline-Zustand wieder in den Online-Zustand wechselt und im Falle des Offline-Zustandes ein am Browser eingehender Anruf erkannt wurde;
- Aufzeichnen an den Webbrowser gerichteter Anrufe im Falle des Offline-Zustandes des Browsers;
- Verwendung von Push-Technologien, um Endgeräte, wie Smartphones und Tablets über den eingehenden Anruf zu informieren,
- Übertragen der Mediendaten mit einer erhöhten Sicherheit, insbesondere verschlüsselt,
- dem Webbrowser eine Liste der aufgezeichneten Anrufe bereitzustellen;
- dem Webbrowser eine Voicemail-Funktionalität bereitzustellen;
- dem Webbrowser eine Rückruf-Funktion für eingegangene Anrufe bereitstellen;
- Bereitstellen eines Smart Handover zwischen den Endgeräten;
- Lazy Connect um dynamisch auf Netzwerkänderungen zum Nutzer-Endgerät zu reagieren;
- Adpush um Audio- oder Video-Medien in bestimmten Situationen einzuspielen;
Und/oder im Bereich der Videotelefonie übernimmt der Agent eine oder mehrere der folgenden Funktionen:
- Annahme der Video-Call-Informationen, insbesondere, wer will wen anrufen,
- Video-Call-Vermittlung an das anzurufende Endgerät;
- Speicherung der Video-Call-Parameter;
- Speicherung des Video-Anrufwunsches für den Fall, dass der Webbrowser nicht aktiv ist;
- Überwachung des Aktivitätszustandes des Browsers insbesondere ob online oder offline;
- Signalisierung eines Video-Call-Wunsches an den Webbrowser wenn dieser nach einem Offline-Zustand wieder in den Online-Zustand wechselt und im Falle des Offline-Zustandes ein am Browser eingehender Video-Call erkannt wurde;
- Aufzeichnen von eingehenden, an den Webbrowser gerichteten Video-Call-Anrufen im Falle des Offline-Zustandes des Browsers, wobei sowohl die Bild- als auch die Audio-Information gespeichert werden;
- Verwenden von Push-Technologien, um Endgeräte wie Smartphones und Tablets über den eingehenden Anruf zu informieren,
- Übertragen von Mediendaten mit einer erhöhten Sicherheit, insbesondere verschlüsselt,
- Bereitstellen einer Liste der aufgezeichneten Video-Calls;
- Bereitstellen einer Videomail-Funktionalität für den Browser;
- Bereitstellen einer Rückruf-Funktion für eingegangene Video Calls für den Browser;
und/oder
im Bereich der Chat-Kommunikation übernimmt der Agent eine oder mehrere der folgenden Funktionen:
- Annahme der Chat-Informationen, wer will mit wem chatten;
- Chat Vermittlung an den Ziel-Browser;
- Speicherung der Chat-Parameter;
- Speicherung des Chat-Wunsches für den Fall, dass der Ziel-Browser nicht aktiv ist;
- Überwachung des Aktivitätszustandes des Ziel-Browsers, insbesondere ob dieser online und/oder offline ist;
- Signalisierung eines Chat-Wunsches an den Ziel-Browser, wenn dieser nach einem Offline-Zustand wieder in den Online-Zustand wechselt und im Falle des Offline-Zustandes ein am Browser eingehender Chat erkannt wurde;
- Aufzeichnen einer eingehenden, an den Ziel-Browser gerichteten Chat-Nachricht im Falle des Offline-Zustandes des Browsers, wobei sowohl die Nachricht, als auch der Absender gespeichert werden;
- Möglichkeit Push-Technologien zu verwenden, um Endgeräte wie Smartphones und Tablets über die eingehenden Nachrichten zu informieren, obwohl die eigentliche Kommunikationsplattform dies nicht unterstützt
- Übertragung der Nachrichten mit einer erhöhten Sicherheit, insbesondere verschlüsselt;
- dem Browser eine Liste der aufgezeichneten Chat-Nachrichten und Initiatoren nach dem Wechsel vom Offline- in den Online-Zustand bereitzustellen;
- dem Browser eine Chat-Rückantwort-Funktion für eingegangene Chat-Nachrichten bereitzustellen.

6. Vorrichtung zur Steuerung von Web- basierten Kommunikation umfassend:
ein Gateway (ComX), das eine API für die Integration einer Kommunikation mit einem Webbrowser bereitstellt nach WebRTC Standard, umfassend eine Konfiguration, um eine Vielzahl von Plug-In-fähigen Konnektoren zur Anbindung von weiteren Plattformelementen zu integrieren, wobei die Plattformelemente einen oder mehreren der folgenden sind:
IP Multimedia Subsystem, PBX SIP Proxy, Telefonanlage, Simple Conference mit Group- Call, Voicemail-Systeme;
das Gateway umfasst Netzwerkschnittstellen, so dass Webbrowser über die die einheitliche API zugreifen können;
das Gateway umfasst Netzwerkschnittstellen zu Plattformelementen;
das Gateway umfasst eine Verarbeitungseinheit zum Aufbauen einer Kommunikationsverbindung des Webbrowsers über die API zum Gateway mit Hilfe der Netzwerkschnittstellen,
die Verarbeitungseinheit ist eingerichtet
- zum Überprüfen des Kommunikationszieles durch das Gateway und Herstellen einer Kommunikationsverbindung zwischen der API und einem der der Konnektoren aus der Vielzahl von Konnektor, die jeweils einem Plattformelement zugeordnet ist,
- zum Aufbauen einer Kommunikationsverbindung zwischen dem Konnektor und dem Plattformelement,
- zum Übertragen von Kommunikationsinformationen zwischen dem Webbrowser und dem Plattformelement über die einheitliche API, das Gateway und den Konnektor wobei die Kommunikationsinformationen durch den Konnektor angepasst werden,
wobei das Gateway eingerichtet ist, um Konnektoren im Betrieb des Gateways anzumelden, auszutauschen oder abzuschalten, wobei die Konnektoren Software Module sind, die in das Gateway als Plug-ins integrierbar sind und jeder aus der Vielzahl von Konnektor über die gleiche einheitlich API des Gateways durch den Webbrowser ansprechbar ist.

7. Vorrichtung nach einem oder mehreren der vorhergehenden Vorrichtungsansprüche, wobei das Gateway in Verbindung mit dem Konnektoren eingerichtet ist, um eine oder mehrere der folgenden Funktionen bereitzustellen:
- Parallel-Ringing, so dass alle für einen Nutzer angemeldeten Endgeräte gleichzeitig über Netzwerkereignisse angesprochen werden, so dass der Nutzer entscheiden kann, mit welchen Endgerät er auf diese Ereignisse reagiert;
- Handover wobei der Nutzer während einer Kommunikationsverbindung das Endgerät wechselt, ohne dass Kommunikationsverbindung abbricht;
- ConferencingDienst, ohne weitere Konfiguration oder Hinzunahme einer weiteren Software-Komponente Audio- oder Video-Konferenzen erzeugt werden, diese können als Group-Call oder Dial-in stattfinden, wobei der Conferencing-Dienst vorzugsweise als eigenständiger Konnektor ausgeführt ist;
- Ändern von Medien-Codecs während einer Verbindung, als Reaktion auf Veränderungen des Netzwerkes;
- Adpush wobei Audio- oder Video-Zusatzinformationen vorzugswiese beim Aufbau der Kommunikationsverbindung oder auch im Konferenzdienst angezeigt werden.

8. Vorrichtung nach einem oder mehreren der vorhergehenden Vorrichtungsansprüche, wobei Device- Konnektoren bereitstellt sind, welche die Nutzererfahrung erfassen.

9. Vorrichtung nach einem oder mehreren der vorhergehenden Vorrichtungsansprüche, wobei die Konnektoren und/oder das Gateway mindestens einen Agenten umfassen, der die Funktion einer Nachrichtenannahme und/oder - Weitervermittlung übernimmt, insbesondere in Abhängigkeit der Verfügbarkeit des Endgerätes.

10. Vorrichtung nach Anspruch 9, wobei der Agent im Bereich der Telefonie ausgebildet ist, um vorzugsweise in Abhängigkeit der Erreichbarkeit, eine oder mehrere der folgenden Funktionen bereitzustellen:
- Annahme der Rufinformationen, insbesondere wer will wen anrufen;
- Ruf-Vermittlung an das anzurufende Endgerät,
- Speicherung der Rufparameter;
- Speicherung des Anrufwunsches für den Fall, dass der Browser nicht aktiv ist;
- Überwachung des Aktivitätszustandes des Webbrowsers, ob dieser online oder offline ist;
- Signalisierung eines Verbindungswunsches an den Webbrowser, wenn dieser nach einem Offline-Zustand wieder in den Online-Zustand wechselt und im Falle des Offline-Zustandes ein eingehender Anruf an den Browser erkannt wurde;
- Aufzeichnen an den Webbrowser gerichteter Anrufe im Falle des Offline-Zustandes des Browsers;
- Verwendung von Push-Technologien, um Endgeräte, wie Smart Phones und Tablets, über den eingehenden Anruf zu informieren;
- Übertragen der Mediendaten mit einer erhöhten Sicherheit, insbesondere verschlüsselt,
- Bereitstellen dem Webbrowser einer Liste der aufgezeichneten Anrufe ;
- Bereitstellen dem Webbrowser einer Voicemail Funktionalität;
- Bereitstellen dem Webbrowser einer Rückruf-Funktion für eingegangene Anrufe;
- Bereitstellen eines Smart-Handover zwischen den Endgeräten;
- Layzy Connect, um Dynamisch auf Netzwerkänderungen zum Endgerät zu reagieren;
- Adpush, um Audio oder Video Medien in bestimmten Situationen einzuspielen;
Und/oder im Bereich der Videotelefonie übernimmt der Agent eine oder mehrere der folgenden Funktionen:
- Annahme der Video-Call Informationen insbesondere, wer will wen anrufen,
- Video-Call- Vermittlung an das anzurufende Endgerät;
- Speicherung der Video-Call Parameter;
- Speicherung des Video-Anrufwunsches für den Fall, dass der Webbrowser nicht aktiv ist;
- Überwachung des Aktivitätszustandes des Browsers insbesondere ob dieser online oder offline ist;
- Signalisierung eines Video-Call Wunsches an den Webbrowser, wenn dieser nach einem Offline- Zustand wieder in den Online- Zustand wechselt und im Falle des Offline-Zustandes ein eingehender Video-Call an den Browser erkannt wurde;
- Aufzeichnen von eingehende, an den Webbrowser gerichteten Video-Call Anrufen, im Falle des Offline Zustandes des Browsers, wobei sowohl Bild- als auch Audio- Information gespeichert wird;
- Verwenden einer Push-Technologien, um Endgeräte wie Smart- Phones und Tablets über den eingehenden Anruf zu informieren,
- Übertragen von Mediendaten mit einer erhöhten Sicherheit, insbesondere verschlüsselt,
- Bereitstellen einer Liste der aufgezeichneten Video-Calls;
- Bereitstellen dem Web-Browser einer Videomail-Funktionalität;
- Bereitstellen dem Browser einer Rückruf-Funktion für eingegangene Video-Calls;
und/oder
im Bereich der Chat-Kommunikation übernimmt der Agent eine oder mehrere der folgenden Funktionen:
- Annahme der Chat-Informationen, wer will mit wem chatten;
- Chat Vermittlung an den Ziel Browser;
- Speicherung der Chat Parameter;
- Speicherung des Chat- Wunsches für den Fall, dass der Ziel-Browser nicht aktiv ist;
- Überwachung des Aktivitätszustandes des Ziel-Browsers, insbesondere ob dieser online und/oder offline ist:
- Signalisierung eines Chat Wunsches an den Ziel-Browser wenn dieser nach einem Offline Zustand wieder in den Online Zustand wechselt und im Falle des Offline Zustandes ein eingehender Chat an den Browser erkannt wurde;
- Aufzeichnen einer eingehende, an den Ziel-Browser gerichtete Chat Nachrichten im Falle des Offline Zustandes des Browsers, wobei sowohl die Nachricht, als auch der Absender gespeichert wird;
- Möglichkeit Push-Technologien zu verwenden, um Endgeräte wie Smart- Phones und Tablets über die eingehenden Nachrichten zu informieren, obwohl die eigentliche Kommunikationsplattform dies nicht unterstützt;
- Übertragung der Nachrichten mit einer erhöhten Sicherheit, insbesondere verschlüsselt;
- Bereitstellen dem Browser eine Liste der aufgezeichneten Chat Nachrichten und -Initiatoren nach dem Wechsel vom Offline- in den Online-Zustand;
- Bereitstellen dem Browser einer Chat- Rückantwort Funktion für eingegangene Chat- Nachrichten bereitzustellen.

## Claims

1. Method for controlling web-based communication, using:
A gateway (ComX) providing an API for integrating communication with a WebRTC standard Web browser, comprising a plurality of plug-in-capable connectors for connecting further platform elements to the gateway, comprising one or more of the following:
IP multimedia subsystem, PBX, SIP proxy, telephone system, simple conference with group call, voicemail systems;
including the following steps:
- Establishing a communication connection from the web browser to the gateway via the API,
- Verifying the communication target by the gateway and establishing a communication link between the API and a connector from the plurality of connectors associated with a platform element,
- Establishing a communication connection between the connector and the platform element,
- Transferring communication information between the web browser and the platform element via the API, the gateway and the connector, with the communication information being adapted by the connector,
wherein connectors are logged on, exchanged or switched off during operation of the gateway, wherein the connectors are software modules which are integrated into the gateway as plug-ins and each of the plurality of connectors can be addressed by the web browser via the same uniform API of the gateway,

2. The method according to the preceding claim, the gateway providing one or more of the following functions in conjunction with the connectors:
- Parallel ringing, so that all terminals logged on for a user are addressed simultaneously via network events, so that the user can decide with which terminal he reacts to these events;
- Handover, wherein the user changes the end device during a communication connection without a communication connection breaking off;
- Conferencing service can be created without further configuration or addition of another software component with the audio or video conferences, which can take place as group call or dial-in, whereby the conferencing is preferably executed as a stand-alone connector,
- Changing media codecs during a connection in response to network changes,
- Adpushing, wherein additional audio or video information is preferably displayed when establishing the communication connection or in the conference service.

3. The method according one or more of the preceding claims, using device connectors providing the user experience.

4. The method according One or more of the preceding claims, wherein the connectors and/or the gateway comprising at least one agent which takes over the function of message acceptance and/or forwarding, in particular depending on the availability of the terminal.

5. The method according to claim 4, whereby the agent provides one or more of the following functions in the area of telephony, preferably depending on availability:
- Acceptance of call information, especially who wants to call whom;
- Call transfer to the terminal to be called;
- Saving the call parameters;
- Saving the call request in case the browser is not active;
- Monitoring the activity status of the web browser, whether It is online or offline;
- Signaling of a connection request to the web browser when it switches back to the online state after an offline state and in the case of the offline state an incoming call was detected at the browser;
- Recording of calls directed to the web browser in case of the offline state of the browser;
- Using push technologies to inform end devices such as smartphones and tablets about the incoming call,
- Transferring of media data with increased security, especially encrypted,
- providing the web browser with a list of recorded calls;
- providing voicemail functionality to the web browser;
- providing the web browser with a callback function for incoming calls;
- Providing a smart handover between the end devices;
- Lazy Connecting to dynamically respond to network changes to the user device;
- Adpushing to play audio or video media in certain situations;
and/or in the field of video telephony the agent takes over one or more of the following functions:
- Accepting of video call information, especially who wants to call whom,
Video call transfer to the terminal to be called;
- Storing of the video call parameters;
- Saving the video call request in case the web browser is not active;
- Monitoring of the browser's activity status, especially whether online or offline;
- Signaling of a video call request to the web browser when It switches back to the online state after an offline state and a video call received by the browser is detected in the case of the offline state;
- Recording incoming video call to the web browser when the browser is offline, saving both image and audio information;
- Using push technologies to inform devices such as smartphones and tablets about the incoming call,
- Transferring of media data with increased security, especially encrypted,
- Providing a list of recorded video calls;
- Providing video mail functionality for the browser;
- Providing a callback function for incoming video calls for the browser;
and/or
In the area of chat communication, the agent performs one or more of the following functions:
- Accepting the chat information, who wants to chat with whom;
- Chat switching to the target browser;
- Saving the chat parameters;
- Saving the chat request in case the target browser is not active;
- Monitoring of the activity state of the target browser, In particular whether it Is online and/or offline;
- Signaling of a chat request to the target browser when It switches back to the online state after an offline state and in the case of the offline state an incoming chat has been detected on the browser;
- Recording an incoming chat message addressed to the target browser in the case of the offline state of the browser, whereby both the message and the sender are saved;
- Possibility to use push technologies to inform end devices such as smartphones and tablets about incoming messages, although the actual communication platform does not support this.
- Transmitting of messages with increased security, especially encrypted;
- providing the browser with a list of recorded chat messages and Initiators after switching from offline to online mode;
- providing the browser with a chat response function for incoming chat messages.

6. A device for controlling web-based communication:
a gateway (ComX) providing an API for integrating communication with a WebRTC standard Web browser, comprising a configuration for integrating a plurality of plug-in-capable connectors for connecting further platform elements, wherein the platform elements are one or more of the following:
IP multimedia subsystem, PBX SIP proxy, telephone system, simple conference with group call, voicemail systems;
the gateway includes network interfaces so that web browsers can access the unified API;
the gateway includes network interfaces to platform elements;
the gateway includes a processing unit for establishing a communication connection from the web browser via the API to the gateway using the network interfaces,
the processing unit is set up
- for checking the communication target by the gateway and establishing a communication connection between the API and one of the connectors from the plurality of connectors, each assigned to a platform element,
- for establishing a communication connection between the connector and the platform element,
- for transmitting communication information between the web browser and the platform element via the unified API, the gateway and the connector, the communication information being adapted by the connector,
wherein the gateway is arranged to register, exchange or switch off connectors during operation of the gateway, wherein the connectors are software modules which can be Integrated into the gateway as plug-ins and each of the plurality of connectors can be addressed by the web browser via the same uniform API of the gateway.

7. The device according to one or more of the preceding device claims, wherein the gateway is arranged in conjunction with the connector to provide one or more of the following functions:
Parallel ringing, so that all terminals logged on for a user are addressed simultaneously via network events, so that the user can decide with which terminal he reacts to these events;
Handover in which the user changes the terminal during a communication connection without interrupting the communication connection;
Conferencing service, without further configuration or addition of another software component, audio or video conferences can be created, which can take place as group calls or dial-in, whereby the conferencing service is preferably executed as a stand-alone connector;
Changing media codecs during a connection in response to network changes;
Adpushing wherein additional audio or video information Is preferably displayed when establishing the communication connection or in the conference service.

8. The device according to one or more of the preceding device claims, wherein device connectors are provided that capture the user experience.

9. The device according to one or more of the preceding device claims, wherein the connectors and/or the gateway comprising at least one agent which implements the function of message accepting and/or message forwarding, in particular depending on the availability of the terminal.

10. The device according to claim 9, wherein the agent being trained in telephony to provide one or more of the following functions, preferably depending on availability:
- Accepting of call information, especially who wants to call whom;
Call transfer to the terminal to be called,
- Saving the call parameters;
- Saving the call request in case the browser is not active;
- Monitoring the activity status of the web browser, whether it is online or offline;
- Signaling of a connection request to the web browser when it switches back to the online state after an offline state and an Incoming call to the browser is detected in the case of the offline state;
- Recording of calls directed to the web browser in case of the offline state of the browser;
- Using of push technologies to inform end devices such as smart phones and tablets about the incoming call;
- Transferring of media data with increased security, especially encrypted,
- Providing the web browser with a list of the recorded calls;
- Providing voicemall functionality to the web browser;
- Providing the web browser with a call back function for incoming calls;
- Providing a smart handover between the end devices;
- Layzy Connecting to dynamically respond to network changes to the end device;
- Adpushing to play audio or video media in certain situations;
and/or in the field of video telephony the agent takes over one or more of the following functions:
- Accepting of video call information, especially who wants to call whom,
Video call transfer to the terminal to be called;
- Storing of the video call parameters;
- Saving the video call request In case the web browser is not active;
- Monitoring of the browser's activity status, in particular whether it is online or offline;
- Signaling of a video call request to the web browser when it switches back to the online state after an offline state and an incoming video call to the browser Is detected in the case of the offline state;
- Recording of Incoming video calls directed to the web browser, in case of the offline state of the browser, whereby both image and audio information is stored;
- Using a push technology to inform end devices such as smart phones and tablets about the incoming call,
- Transferring of media data with increased security, especially encrypted,
- Providing a list of recorded video calls;
- Providing the web browser of a videomail functionality;
- Providing the browser with a call back function for incoming video calls;
and/or
In the area of chat communication, the agent performs one or more of the following functions:
- Accepting the chat information, who wants to chat with whom;
- Chat switching to the target browser;
- Saving the chat parameters;
- Saving the chat request in case the target browser is not active;
- Monitoring of the activity state of the target browser, in particular whether it is online and/or offline:
- Signaling of a chat request to the target browser if it changes back to the online state after an offline state and in the case of the offline state an incoming chat was recognized to the browser;
- Recording of an incoming chat message directed to the target browser in case of the offline state of the browser, whereby both the message and the sender are stored;
- Possibility to using push technologies to inform end devices such as smart phones and tablets about incoming messages, although the actual communication platform does not support this;
- Transmitting of messages with increased security, especially encrypted;
- Providing the browser with a list of recorded chat messages and initiators after switching from offline to online mode;
- Providing the browser with a chat response function for incoming chat messages.

## Revendications

1. Un procédé de commande d'une communication Web, utilisant :
une passerelle (ComX) fournissant une API pour intégrer une communication avec un navigateur Web, selon la norme WebRTC, comprenant une pluralité de connecteurs capables d'interfacer d'autres éléments de plate-forme à la passerelle, comprenant un ou plusieurs des éléments suivants:
des systèmes de messagerie vocale, de conférence simple avec appel de groupe ou système téléphonique de sous-système multimédia IP, PBX, proxy SIP,
comprenant les étapes suivantes :
- l'établissement d'une liaison de communication depuis le navigateur web à la passerelle via l'API,
- la vérification de la cible de communication par la passerelle et l'établissement d'une liaison de communication entre l'API et un connecteur au sein de la pluralité de connecteurs associé à l'élément de plate-forme,
- l'établissement d'une connexion de communication entre le connecteur et l'élément de plate-forme,
- le transfert des informations de communication entre le navigateur Web et l'élément de plateforme via l'API, la passerelle et le connecteur, les informations de communication étant adaptées par le connecteur,
dans lequel les connecteurs sont enregistrés, échangés ou éteints dans le fonctionnement de la passerelle,
dans lequel les connecteurs sont des modules logiciels qui sont intégrés dans la passerelle sous forme de plug-in et chaque connecteur au sein de la pluralité de connecteurs peut être adressé par le navigateur web via la même API uniforme de la passerelle.

2. Le procédé selon la revendication précédente, dans lequel la passerelle fournit une ou plusieurs des fonctions suivantes, conjointement avec les connecteurs:
- une sonnerie parallèle, de sorte que tous les terminaux enregistrés pour un utilisateur sont adressés simultanément via des événements réseau, afin que l'utilisateur puisse décider avec quel terminal il réagit à ces événements;
- un transfert dans lequel l'utilisateur change le terminal pendant une connexion de communication sans qu'une connexion de communication ne soit rompue;
- un service de conférence pouvant être créé sans autre configuration ou ajout d'un autre composant logiciel, avec génération de conférences audio ou vidéo, lesquelles peuvent se dérouler en appel de groupe ou en appel, la conférence étant de préférence réalisée en tant que connecteur autonome,
- une modification de codecs média lors d'une connexion, en réponse à des changements dans le réseau,
- un push dans lequel une information audio ou vidéo additionnelle est affichée de préférence lors de l'établissement de la communication ou lors du service de conférence.

3. Le procédé selon une ou plusieurs des revendications précédentes, utilisant des connecteurs de dispositifs fournissant une expérience d'utilisateur,

4. Le procédé selon une ou plusieurs des revendications précédentes, dans lequel les connecteurs et/ou la passerelle comprennent au moins un agent, qui prend en charge la fonction d'acceptation et/ou de transmission d'un message, en particulier en fonction de la disponibilité du terminal.

5. Le procédé selon la revendication 4, dans lequel l'agent fournit une ou plusieurs des fonctionnalités suivantes dans le domaine de la téléphonie, de préférence en fonction de la disponibilité :
- une acceptation des informations d'appel, en particulier qui veut appeler,
- un transfert d'appel vers le terminal à appeler ;
- une sauvegarde de paramètres d'appel ;
- une sauvegarde d'une demande d'appel lorsque le navigateur n'est pas actif
- un suivi de l'état d'activité du navigateur Web, qu'il soit en ligne ou hors ligne;
- une signalisation d'une demande de connexion au navigateur Web lorsqu'il retourne à l'état en ligne à la suite d'un état hors ligne et, dans le cas d'un état hors ligne, lorsqu'un appel entrant a été détecté par le navigateur;
- l'enregistrement d'appels dirigés vers le navigateur Web dans le cas d'un état hors ligne du navigateur ;
- une utilisation de techniques de push pour informer les terminaux, tels que les téléphones intelligents et les tablettes, de l'appel entrant;
- un transfert de données multimédia avec une sécurité accrue, en particulier cryptée,
- une fourniture au navigateur Web d'une liste d'appels enregistrés;
- une fourniture d'une fonctionnalité de messagerie vocale au navigateur Web ;
- une fourniture au navigateur web d'une fonction de rappel pour les appels entrants;
- une fourniture d'un transfert intelligent entre les terminaux;
- une connexion passive pour reporter dynamiquement au terminal utilisateur des changements réseaux;
- un push pour l'exécution de médias audios ou vidéo dans certaines situations; et/ou dans le domaine de la visiophonie, l'agent assure une ou plusieurs des fonctions suivantes:
- une acceptation d'informations d'appel vidéo, en particulier qui veut appeler qui,
- une sauvegarde des paramètres d'appel vidéo ;
- une sauvegarde d'une demande d'appel vidéo dans le cas où le navigateur Web n'est pas actif ;
- un suivi de l'état d'activité du navigateur, en particulier lorsqu'il est en ligne ou hors ligne,
- une signalisation d'une demande d'appel vidéo au navigateur Web s'il retourne à l'état en ligne à la suite d'un état hors ligne et lorsqu'un appel vidéo reçu par le navigateur est détecté dans le cas d'un état hors ligne ;
- un enregistrement des appels d'appels vidéo entrants par le navigateur Web lors d'un état hors ligne, en sauvegardant à la fois une information audio et image ;
- une utilisation de techniques push pour informer des terminaux tels que des téléphones intelligents et des tablettes au sujet de l'appel entrant,
- un transfert de données multimédia avec une sécurité accrue, en particulier cryptée,
- une fourniture d'une liste d'appels vidéo enregistrés;
- une fourniture d'une fonction de rappel pour le navigateur pour les appels vidéo entrants;
et/ou
dans le domaine de la communication par discussion, l'agent exécute une ou plusieurs des fonctions suivantes:
- une acceptation des informations de discussion, qui veut discuter avec qui
- une commutation de discussion vers le navigateur cible ;
- une sauvegarde des paramètres de discussion ;
- une sauvegarde de la demande de discussion dans le cas où le navigateur cible n'est pas actif
- une surveillance de l'état d'activité du navigateur cible, en particulier s'il est en ligne et/ou hors ligne,
- une signalisation d'une demande de discussion à l'attention du navigateur ciblé lorsqu'il retourne à l'état en ligne à la suite d'un état hors ligne, et dans le cas d'un état hors ligne lorsqu'une discussion entrante est détectée sur le navigateur ;
- l'enregistrement d'un message de discussion entrant adressé au navigateur cible dans le cas d'un état hors ligne du navigateur, au moyen duquel le message et l'expéditeur sont sauvegardés ;
- une possibilité d'utilisation de techniques push pour informer les terminaux tels que des téléphones intelligents et des tablettes au sujet des messages entrants, quand bien même cela n'est pas supporté par la plate-forme de communication actuelle ;
- une transmission de messages avec une sécurité accrue, notamment cryptée;
- une fourniture au navigateur d'une liste des messages de discussion enregistrés et des initiateurs à la suite du passage de l'état hors ligne à l'état en ligne;
- une fourniture au navigateur d'une fonction de réponse à la discussion pour les messages de discussion entrants.

6. Un dispositif de commande d'une communication Web comprenant:
une passerelle (ComX) fournissant une API pour intégrer une communication avec un navigateur Web, selon la norme WebRTC, comprenant une configuration pour intégrer une pluralité de connecteurs capables d'interfacer d'autres éléments de plate-forme, dans lequel les éléments de plate-forme sont l'un ou plusieurs des éléments suivants:
des systèmes de messagerie vocale, de conférence simple avec appel de groupe ou système téléphonique de sous-système multimédia IP, PBX, proxy SIP,
la passerelle comprenant des interfaces de réseau afin que les navigateurs web puissent accéder à l'API unifiée ;
la passerelle comprenant des interfaces de réseau pour les éléments de plate-forme ;
la passerelle comprenant une unité de traitement pour établir une liaison de communication depuis le navigateur web via l'API vers la passerelle en utilisant les interfaces de réseau,
l'unité de traitement étant configurée :
- pour tester la cible de communication par la passerelle et établir une liaison de communication entre l'API et un connecteur au sein de la pluralité de connecteurs chacun étant associé à un élément de plate-forme,
- pour établir une liaison de communication entre le connecteur et l'élément de plate-forme,
- pour transmettre des informations de communication entre le navigateur Web et l'élément de plateforme via l'API unifiée, la passerelle et le connecteur, les informations de communication étant adaptées par le connecteur,
dans lequel la passerelle est configurée pour enregistrer, échanger ou éteindre les connecteurs durant le fonctionnement de la passerelle, dans lequel les connecteurs sont des modules logiciels qui sont intégrés dans la passerelle sous forme de plug-in et chaque connecteur au sein de la pluralité de connecteurs peut être adressé par le navigateur web via la même API uniforme de la passerelle.

7. Le dispositif selon l'une ou plusieurs des revendications de dispositif précédentes, dans lequel la passerelle est configurée pour fournir l'une ou plusieurs des fonctionnalités suivantes, conjointement avec le connecteur :
- une sonnerie parallèle, de sorte que tous les terminaux enregistrés pour un utilisateur sont adressés simultanément via des événements réseau, afin que l'utilisateur puisse décider avec quel terminal il réagit à ces événements;
- un transfert dans lequel l'utilisateur change le terminal pendant une connexion de communication sans qu'une connexion de communication ne soit rompue;
- un service de conférence pouvant être créé sans autre configuration ou ajout d'un autre composant logiciel, avec génération de conférences audio ou vidéo, lesquelles peuvent se dérouler en appel de groupe ou en appel, la conférence étant de préférence réalisée en tant que connecteur autonome ;
- une modification de codecs média lors d'une connexion, en réponse à des changements au sein du réseau,
- un push dans lequel une information audio ou vidéo additionnelle est affichée de préférence lors de l'établissement de la communication ou lors du service de conférence.

8. Le dispositif selon l'une ou plusieurs des revendications de dispositif précédentes, dans lequel sont disposés des connecteurs qui détectent l'expérience de l'utilisateur.

9. Le dispositif selon l'une ou plusieurs des révendications de dispositif précédentes, dans lequel les connecteurs et/ou la passerelle comprennent au moins un agent, qui implémente la fonction d'acceptation et/ou de transmission de message, en particulier en fonction de la disponibilité du terminal.

10. Le dispositif selon la revendication 9, dans lequel l'agent bénéficie d'un apprentissage, dans le domaine de la téléphonie, pour fournir une plusieurs des fonctionnalités suivantes, de préférence en fonction de la disponibilité :
- une acceptation des informations d'appel, en particulier qui veut appeler,
- un transfert d'appel vers le terminal à appeler ;
- une sauvegarde de paramètres d'appel ;
- une sauvegarde d'une demande d'appel lorsque le navigateur n'est pas actif
- un suivi de l'état d'activité du navigateur Web, qu'il soit en ligne ou hors ligne;
- une signalisation d'une demande de connexion au navigateur Web lorsqu'il retourne à l'état en ligne à la suite d'un état hors ligne et, dans le cas d'un état hors ligne, lorsqu'un appel entrant a été détecté par le navigateur;
- l'enregistrement d'appels dirigés vers le navigateur Web dans le cas d'un état hors ligne du navigateur ;
- une utilisation de techniques de push pour informer les terminaux, tels que les téléphones intelligents et les tablettes, de l'appel entrant;
- un transfert de données multimédia avec une sécurité accrue, en particulier cryptée,
- une fourniture au navigateur Web d'une liste d'appels enregistrés;
- une fourniture d'une fonctionnalité de messagerie vocale au navigateur Web ;
- une fourniture au navigateur web d'une fonction de rappel pour les appels entrants;
- une fourniture d'un transfert intelligent entre les terminaux;
- une connexion passive pour reporter dynamiquement au terminal utilisateur des changements réseaux;
- un push pour l'exécution de médias audio ou vidéo dans certaines situations;
et/ou dans le domaine de la visiophonie, l'agent assure une ou plusieurs des fonctions suivantes:
- une acceptation d'informations d'appel vidéo, en particulier qui veut appeler qui,
Un transfert d'appel vidéo vers le terminal devant être appelé ;
- une sauvegarde des paramètres d'appel vidéo ;
- une sauvegarde d'une demande d'appel vidéo dans le cas où le navigateur Web n'est pas actif ;
- un suivi de l'état d'activité du navigateur, en particulier lorsqu'il est en ligne ou hors ligne,
- une signalisation d'une demande d'appel vidéo au navigateur Web s'il retourne à l'état en ligne à la suite d'un état hors ligne et lorsqu'un appel vidéo reçu par le navigateur est détecté dans le cas d'un état hors ligne ;
- un enregistrement des appels d'appels vidéo entrants par le navigateur Web lors d'un état hors ligne, en sauvegardant à la fois une information audio et image ;
- une utilisation de techniques push pour informer des terminaux tels que des téléphones intelligents et des tablettes au sujet de l'appel entrant,
- un transfert de données multimédia avec une sécurité accrue, en particulier cryptée,
- une fourniture d'une liste d'appels vidéo enregistrés;
- une fourniture au navigateur d'une fonction de rappel pour les appels vidéo entrants;
et/ou
dans le domaine de la communication par discussion, l'agent exécute une ou plusieurs des fonctions suivantes:
- une acceptation des informations de discussion, qui veut discuter avec qui
- une commutation de discussion vers le navigateur cible ;
- une sauvegarde des paramètres de discussion ;
- une sauvegarde de la demande de discussion dans le cas où le navigateur cible n'est pas actif
- une surveillance de l'état d'activité du navigateur cible, en particulier s'il est en ligne et/ou hors ligne,
- une signalisation d'une demande de discussion à l'attention du navigateur cible lorsqu'il retourne à l'état en ligne à la suite d'un état hors ligne, et dans le cas d'un état hors ligne lorsqu'une discussion entrante est détectée sur le navigateur ;
- l'enregistrement d'un message de discussion entrant adressé au navigateur cible dans le cas d'un état hors ligne du navigateur, au moyen duquel le message et l'expéditeur sont sauvegardés ;
- une possibilité d'utilisation de techniques push pour informer les terminaux tels que des téléphones intelligents et des tablettes au sujet des messages entrants, quand bien même cela n'est pas supporté par la plate-forme de communication actuelle ;
- une transmission de messages avec une sécurité accrue, notamment cryptée;
- une fourniture au navigateur d'une liste des messages de discussion enregistrés et des initiateurs à la suite du passage de l'état hors ligne à l'état en ligne;
- une fourniture au navigateur d'une fonction de réponse à la discussion pour les messages de discussion entrants.
